# EUROPÄISCHE PATENTANMELDUNG

(11) **EP 1 830 177 A1**
(43) Veröffentlichungstag der Anmeldung: **05.09.2007**
(21) Anmeldenummer: 06110608.4
(22) Anmeldetag: 02.03.2006
(51) Int. Cl.: G01N 21/86, G01N 21/25

(54) **Integriertes Testelement**

(71) Anmelder: F. Hoffmann-la Roche AG, 4070 Basle (CH); Roche Diagnostics GmbH, 68305 Mannheim (DE)
(72) Erfinder: Bernd, Roesicke, 68305 Mannheim (DE); Dr. Kai Hebestreit, 69120 Heidelberg (DE); Dr. Claudia, Gaessier-Dietsche, 69198 Schriesheim (DE); Frederic, Wehowski, 68766 Hockenheim (DE)
(74) Vertreter: Dick, Alexander

(57) **Zusammenfassung**

Es wird ein integriertes Testelement (110) zum Nachweis mindestens eines Analyten in einer Probe (142), insbesondere einer flüssigen Probe (142), vorgeschlagen. Das integrierte Testelement (110) weist ein Trägerelement (112) auf, mit einer Applikationsseite (114), auf der mindestens ein organisches elektrolumineszierendes Bauelement (126) aufgebracht ist. Weiterhin ist auf der Applikationsseite (114) mindestens eine Indikatorsubstanz (136) aufgebracht, welche mindestens eine optische Eigenschaft, insbesondere eine Emissionseigenschaft (z. B. eine Fluoreszenzeigenschaft), ändert, wenn diese in Kontakt mit dem mindestens einen Analyten gerät. Weiterhin weist das integrierte Testelement (110) mindestens ein Photodetektor-Element (116) auf.

## Beschreibung

Die Erfindung betrifft ein integriertes Testelement zum Nachweis mindestens eines Analyten in einer Probe, insbesondere in einer flüssigen Probe. Derartige Testelemente werden beispielsweise in der Medizin und der analytischen Chemie für Nachweise, beispielsweise Schnelltests, bestimmter Chemikalien und Substanzen verwendet sowie in der Biochemie, in der medizinischen Analytik, im Bereich der Sicherheitstechnik, im Bereich der Umwelttechnik oder in anderen Gebieten der Naturwissenschaften und Technik eingesetzt.

### Stand der Technik

Der schnelle, einfache und dennoch zuverlässige Nachweis bestimmter Analyten in einer Probe ist in verschiedenen Bereichen der Technik und Naturwissenschaften von essenzieller Bedeutung. Je nach Anforderung und gewünschter Genauigkeit werden dabei zahlreiche Nachweisverfahren eingesetzt. Ein aus dem Stand der Technik bekanntes Verfahren, welches in zahlreichen Varianten existiert, ist optischer Natur und beruht darauf, dass der nachzuweisende Analyt in vielen Fällen Einfluss nimmt auf die optischen Eigenschaften bestimmter Indikatorsubstanzen. So kann der Analyt beispielsweise ein Fluoreszenz- und/oder Phosphoreszenz-Verhalten einer Indikatorsubstanz beeinflussen, beispielsweise indem die Intensität eines Fluoreszenzlichts, welches die Indikatorsubstanz unter Anregung durch eine Anregungslichtquelle emittiert, bei Anwesenheit des nachzuweisenden Analyten verringert wird ("Quenching"). Anstelle einer Verringerung kann auch der gegenteilige Effekt genutzt werden, beispielsweise indem ein FluoreszenzVerhalten gesteigert wird oder erst erzeugt wird, wenn der Analyt mit der Indikatorsubstanz wechselwirkt. Zahlreiche derartige Verfahren sind aus dem Stand der Technik bekannt.

So nutzt beispielsweise eine in B. Choudhury et al: Glucose biosensors based on organic light-emitting devices structurally integrated with a luminescent sensing element, Journal of Applied Physics, 96 (5), 2949, 2004 beschriebene Vorrichtung ein optisches Verfahren zum Glucosenachweis, welches auf einer enzymatischen Oxidation von Glucose in Anwesenheit von Glucoseoxidase (GOD) beruht. Die Glucosekonzentration wird dabei mittels eines Sauerstoff-sensitiven Farbstoffes gemessen, welcher gemeinsam mit der Glucoseoxidase in einer Indikatorschicht oder in einer Lösung vorhanden ist. Anstelle von Glucoseoxidase kann für den Nachweis von Glucose alternativ auch Glucosedehydrogenase (GlucDH) als Katalysator für die Umwandlung von Glucose in Anwesenheit von NAD in Gluconolacton genutzt werden (siehe z. B. die Ausführungsbeispiele in DE 103 04 448 A1 oder WO 03/097859 A2).

Neben dem Nachweis von Glucose sind insbesondere aus dem Bereich der Medizintechnik noch andere Nachweise für verschiedene Analyte bekannt. So wird beispielsweise in O. Hofmann et al: Towards microalbuminuria determination on a disposable diagnostic microchip with integrated fluorescence detection based on thin-film organic light emitting diodes, Lab Chip, 2005, 5, 863-868, ein Verfahren zum Nachweis von HSA (Human Serum Albumin) beschrieben. Das Verfahren beruht auf einer Reaktion von HSA mit dem Farbstoff Albuminblau 580, welche eine starke Emission bei 620 nm erzeugt, wenn eine Anregung mit einem Licht geeigneter Wellenlänge erfolgt.

Daneben sind weitere chemische und/oder biochemische optische Nachweise aus dem Stand der Technik bekannt. Aus US 6,331,438 B1 ist beispielsweise eine Reihe von Farbstoffen bekannt, welche zum Nachweis von molekularem Sauerstoff verwendet werden kann. Auch andere Arten von Analyten lassen sich auf diese Weise direkt oder indirekt nachweisen.

Insbesondere im Bereich der mobilen chemischen Analytik, der Umweltanalytik oder der medizinischen Diagnostik stellt sich dabei jedoch das Problem, dass herkömmliche optische Nachweismethoden, welche aufwändige apparative Aufbauten erfordern (z. B. voluminöse Lichtquellen mit Monochromatoren, Laser oder Photometer), in der Praxis, insbesondere für den mobilen Einsatz, kaum handhabbar sind. Aus dem Stand der Technik sind daher verschiedene Ansätze bekannt, Testvorrichtungen oder Testelemente bereitzustellen, welche auf einer teilweisen Integration eines der beschriebenen optischen Nachweisverfahren beruhen. So zeigt beispielsweise EP 0 811 154 B1 einen optischen Fluoreszenzsensor, welcher auf einem in eine Polymermatrix eingebetteten Indikatormolekül basiert. Zum Fluoreszenznachweis sind ein Photodetektor, eine Anregungs-Leuchtdiode und eine Indikatormembran als Komponenten in den Fluoreszenzsensor integriert.

Aus EP 0 244 394 B1 ist ein mikrostrukturiertes Sensorelement zur Bestimmung von Stoffkonzentrationen in gasförmigen und flüssigen Proben bekannt, welches eine Trägerschicht und eine Indikatorschicht aufweist. Auf der Trägerschicht ist ein Substrat angeordnet, in welches mindestens ein photoempfindliches Element integriert ist. Dieses Substrat weist mindestens einen Bereich auf, welcher für die Anregungsstrahlung zur Anregung der Indikatorsubstanz durchlässig ist.

In US 4,889,690 wird eine Sensoranordnung zum Messen von physikalischen Parametern oder Konzentrationen von Partikeln dargestellt, welche eine laminare Lichtquelle beinhaltet. In einer Indikatorschicht sind Indikatorpartikel eingebettet, welche unter Anregung durch die laminare Lichtquelle fluoreszieren, wobei das Fluoreszenzlicht durch einen photoelektrischen Empfänger detektiert wird.

Aus US 6,331,438 B1 ist ein optischer Sensor bekannt, welcher zum Nachweis chemischer, biologischer oder physikalischer Analyten dient. Dabei ist eine Analytsensitive Schicht optisch gekoppelt mit einer Dünnfilm-Elektrolumineszenzschicht. Die optische Antwort der Analyt-sensitiven Schicht auf das Anregungslicht wird durch einen Photodetektor aufgenommen.

Aus dem bereits zitierten Artikel von B. Choudhury et al. ist eine Anordnung zur Glucosedetektion bekannt, welche auf einer Anregung eines im roten Spektralbereich emittierenden Farbstoffs, welcher gemeinsam mit Glucoseoxidase in einer Indikatorschicht eingebettet ist, beruht. Dabei wird ein so genanntes "Rückseiten-Detektionsverfahren" eingesetzt, bei welchem die Indikatorschicht durch ein Glassubstrat hindurch mittels einer organischen Leuchtdiode (OLED) angeregt wird. Das Fluoreszenzlicht wird, ebenfalls nach Durchdringen des Glassubstrats, mittels eines Photomultipliers (PMT) gemessen.

Eine Nachweisvorrichtung zum Nachweis von HSA ist aus dem bereits zitierten Artikel von O. Hofmann et al. bekannt. Dabei wird ein mikrostrukturierter Chip eingesetzt, bei welchem eine den Analyten enthaltende flüssige Probe in eine Detektionskammer geleitet wird. Dort erfolgt eine Anregung mittels einer organischen Leuchtdiode, wobei Fluoreszenzlicht mittels einer Spektrometerfaser zu einem Spektrometer geleitet und analysiert wird.

Die aus dem Stand der Technik bekannten Vorrichtungen und Verfahren weisen jedoch für den praktischen Einsatz, insbesondere den Einsatz in der mobilen medizinischen Diagnostik, zahlreiche Nachteile auf, welche einen großflächigen Einsatz in der chemischen Analytik oder medizinischen Diagnostik bislang oft verhindert haben. So sind viele der offenbarten Verfahren mit äußerst aufwändigen Bauteilmontagen verbunden, wie beispielsweise das in EP 0 811 154 B1 dargestellte Sensorelement. Derartige Sensorelemente sind insbesondere für Einweg-Tests aufgrund hoher Herstellungskosten kaum einsetzbar. Selbst wenn nur einzelne Bauteile derartiger Sensoren ausgewechselt werden müssen, verhindert der komplexe Auswechselvorgang einen Einsatz in der mobilen medizinischen Diagnostik, bei welchem beispielsweise ältere Patienten und Kinder derartige Vorrichtungen bedienen müssen. Auch das aus EP 0 244 394 B1 bekannte Sensorelement, welches aufwändige anorganische Mikrostrukturierungsverfahren wie beispielsweise Lithographietechniken oder ähnliches nutzt, ist aufgrund seiner Komplexität und der mit den Mikrostrukturierungsverfahren verbundenen hohen Herstellungskosten für viele Bereiche der medizinischen Diagnostik kaum einsetzbar.

Auch die aus US 4,889,690, aus US 6,331,438 B1, aus der oben genannten Veröffentlichung von B. Choudhury et al. und aus der oben genannten Veröffentlichung von O. Hofmann et al. genannten Vorrichtungen sind mit mehreren Nachteilen verbunden, welche insbesondere auf dem Einsatz aufwändiger Detektionsvorrichtungen für das Fluoreszenzlicht beruhen. So ist beispielsweise bei den von B. Choudhury et al. und O. Hofmann et al. verwendeten Vorrichtungen ein voluminöser Photomultiplier oder gar ein Spektrometer und ein Fasersystem erforderlich, was einen Einsatz in der mobilen medizinischen Diagnostik weitgehend ausschließt. Ähnlich aufwändig ist auch der in US 6,331,438 B1 dargestellte Photodetektor, welcher von der eigentlichen Testvorrichtung getrennt angeordnet ist und welcher für ein zeitaufgelöstes Verfahren einsetzbar und dementsprechend aufwändig ausgestaltet sein muss. Das in US 4,889,690 dargestellte Sensorelement, welches auf der Verwendung von elektro-chemolumineszenten Strahlungsquellen beruht, benötigt hohe Betriebsspannungen und erzielt gleichzeitig geringe Lichtausbeuten, wodurch ebenfalls die Anforderungen an den eingesetzten Photodetektor stark gesteigert werden.

Ein weiterer Nachteil der in US 6,331,438 B1 und in der Veröffentlichung von B. Choudhury et al. dargestellten Vorrichtungen besteht darin, dass die gezeigten Schichtaufbauten eine beidseitige Beschichtung eines Glassubstrates beinhalten. Derartig beidseitig beschichtete Vorrichtungen sind in der Praxis kaum herzustellen, insbesondere da beispielsweise das Aufbringen einer Metallschicht auf eine Seite des Substrats gleichzeitig zu einer Verunreinigung der Rückseite des Substrats führt, welche auch durch aufwändige apparative Schutzmaßnahmen kaum zu verhindern ist. Auch eine Handhabung beidseitig beschichteter empfindlicher Substrate, insbesondere eine kostengünstige automatisierte Handhabung, ist in der Praxis kaum zu bewerkstelligen. Weiterhin ist auch eine Benutzung derartig beidseitig beschichteter Testelemente durch einen Patienten mit erhöhten Schwierigkeiten verbunden.

### Aufgabe der Erfindung

Die Aufgabe der Erfindung besteht daher darin, ein integriertes Testelement zu schaffen, welches den Nachweis mindestens eines Analyten in einer Probe, insbesondere einer flüssigen Probe, ermöglicht. Das Testelement soll insbesondere für den Einsatz in der mobilen Analytik, insbesondere der mobilen medizinischen Diagnostik, geeignet sein und entsprechend kostengünstig, zuverlässig, einfach herzustellen und einfach handhabbar sein, wobei möglichst die oben genannten Nachteile der aus dem Stand der Technik bekannten Vorrichtungen vermieden werden sollen.

### Beschreibung der Erfindung

Diese Aufgabe wird durch ein integriertes Testelement mit den Merkmalen des unabhängigen Anspruchs 1 gelöst. Vorteilhafte Weiterbildungen sind in den abhängigen Ansprüchen dargestellt. Weiterhin wird ein Verfahren zur Herstellung eines erfindungsgemäßen integrierten Testelements vorgeschlagen.

Unter einem "integrierten" Testelement ist dabei insbesondere ein Testelement zu verstehen, welches einstückig ausgebildet ist, wobei eine oder mehrere gegebenenfalls erforderliche elektronische Ansteuer- und/oder Auswertungsvorrichtungen nicht berücksichtigt werden sollen. Gegebenenfalls erforderliche separate elektrische Zuführungen oder Kontaktierungsvorrichtungen beziehungsweise auch eine voll integrierte (Hybrid-) Ausführung (siehe z. B. DE 102 53 154 A1) stehen dieser Definition nicht entgegen und sind mit umfasst.

Das integrierte Testelement dient zum Nachweis mindestens eines Analyten in einer Probe. Dabei kann es sich vorzugsweise um fluide Proben, das heißt um gasförmige oder flüssige Proben, insbesondere um flüssige Proben, handeln, wie beispielsweise Blut oder Blutbestandteile, Urin oder andere Körperflüssigkeiten, welche im Bereich der medizinischen Diagnostik genutzt werden. Abhängig vom Einsatzgebiet, beispielsweise einem Einsatz in der chemischen Analytik oder in der Umwelttechnik, kommen jedoch andere Arten von Proben in Betracht, beispielsweise einfache Umgebungsluft, flüssige Reaktionsgemische oder ähnliches.

Auch der Begriff des mindestens einen nachzuweisenden Analyten ist je nach Einsatzgebiet weit zu fassen. Unter Verweis auf den oben genannten Stand der Technik kann es sich dabei beispielsweise um ein oder mehrere anorganische oder organische Moleküle handeln, welche direkt oder indirekt nachgewiesen werden. Die nachfolgenden Ausführungen beziehen sich im Wesentlichen auf einen Nachweis von Glucose, ohne jedoch den Anwendungsbereich der Erfindung einzuschränken.

Das vorgeschlagene integrierte Testelement zum Nachweis des mindestens einen Analyten in der Probe weist mindestens ein Trägerelement auf. Im Gegensatz zu vielen der aus dem Stand der Technik bekannten Vorrichtungen muss es sich bei diesem Trägerelement nicht notwendigerweise um ein transparentes Trägerelement wie beispielsweise ein empfindliches Glassubstrat handeln. Glassubstrate werden in der Praxis bei organischen Leuchtdioden oder anderen organischen elektronischen Bauelementen in der Regel eingesetzt, da Glas gute Barriereeigenschaften gegen Feuchtigkeit und Sauerstoff aufweist und somit die empfindlichen organischen und metallischen Werkstoffe der Bauelemente schützt. Da jedoch Testelemente, insbesondere Testelemente in der medizinischen Analytik, in vielen Fällen trocken gelagert werden und nur vergleichsweise geringe Betriebszeiten haben, kann bei Testelementen auf derartig strenge Anforderungen an das Trägerelement häufig verzichtet werden.

So kann das Trägerelement prinzipiell aus beliebigem starrem oder flexiblem Material bestehen. Auch Trägerelemente mit komplexer Zusammensetzung, beispielsweise mehrschichtige Aufbauten, sind möglich. So kann das Trägerelement beispielsweise ein flexibles Kunststoff und/oder Glassubstrat umfassen, beispielsweise eine Kunststofffolie, z. B. eine PET-Folie oder auch ein Glassubstrat, beispielsweise ein dünnes, flexibles Glassubstrat, wobei beispielsweise auf dünne Gläser zurückgegriffen werden kann, welche hinunter bis zu Schichtdicken von circa 50 bis 100 µm kommerziell erhältlich sind. Auch Papier-, Papp- und/oder Keramiksubstrate oder Substrate aus Kunststoffinaterialien sind möglich. Somit kann, im Gegensatz zu den aus dem Stand der Technik bekannten Testelementen, das Trägerelement an den jeweiligen Einsatzzweck angepasst werden.

Beispielsweise können zur Reduktion von Kosten und/oder Gewicht der Testelemente Trägerelemente mit Papier- und/oder Kunststoffsubstraten eingesetzt werden, was beispielsweise einen Einsatz als Einwegartikel ermöglicht.

Das Trägerelement weist eine Applikationsseite auf. Diese Applikationsseite (wobei es sich sinngemäß auch um eine aus mehreren Oberflächen zusammengesetzte Applikationsseite handeln kann) kann, entsprechend der Gestalt des Trägerelements, verschiedene Gestalten annehmen, beispielsweise eine ebene Gestalt und/oder eine gekrümmte Gestalt, beispielsweise die Gestalt einer Zylinderoberfläche oder eines Konus. Dabei ist es bevorzugt, wenn die Applikationsseite zumindest in Teilbereichen eine möglichst geringe Oberflächenrauigkeit aufweist. Dies ist für den Aufbau organischer elektronischer Bauelemente (siehe unten) von Vorteil, da auf diese Weise Spannungsspitzen vermieden und die Lebensdauer und Zuverlässigkeit der Bauelemente erhöht wird. In anderen Bereichen kann alternativ oder zusätzlich jedoch auch eine raue Oberfläche eingesetzt werden, beispielsweise um partiell eine höhere Lichtstreuung durch das Trägerelement zu erzielen, um die optischen Eigenschaften des Trägerelements gezielt an den Einsatzzweck (z. B. verstärkte Anregung durch diffuses Anregungslicht) anzupassen.

Gegebenenfalls kann die Oberflächenrauigkeit der Applikationsseite durch nachträgliche Bearbeitung (z. B. Polieren) und/oder durch Aufbringen zusätzlicher Glättungsschichten (welche dann sinngemäß Bestandteil des mindestens einen Trägerelements sind), wie beispielsweise organischer Glättungsschichten, verbessert werden. Derartige Techniken sind aus dem Bereich der Herstellung organischer Leuchtdioden bekannt, wobei beispielsweise Cu-Phthalocyanin, Polyanilin (PANI) oder anorganische Glättungsschichten, wie beispielsweise Siliciumdioxid oder ähnliches, verwendet werden können. Durch derartige Glättungsschichten, welche beispielsweise mittels eines nasschemischen Prozesses oder eines Gasphasen-Prozesses (z. B. Physical Vapor Deposition, PVD, oder Chemical Vapor Deposition, CVD) auf das Trägerelement aufgebracht werden können, lassen sich Oberflächenrauigkeiten der Applikationsseite des Trägerelements im gewünschten Bereich einstellen.

Auf der Applikationsseite des Trägerelementes ist mindestens ein organisches elektrolumineszierendes Bauelement, insbesondere mindestens ein Dünnfilm-Bauelement, vorzugsweise mindestens eine organische lichtemittierende Diode (OLED), aufgebracht. Dabei kann das mindestens eine organische elektrolumineszierende Bauelement unmittelbar auf die Applikationsseite des Trägerelements aufgebracht sein oder, alternativ oder zusätzlich, auch unter Zwischenschaltung weiterer Zwischenschichten, auf die Applikationsseite des Trägerelements aufgebracht sein. Auch zusätzliche Bauelemente können zwischen die Applikationsseite des Trägerelements und das mindestens eine organische elektrolumineszierende Bauelement eingebracht sein.

Der Aufbau und die Zusammensetzung des mindestens einen organischen elektrolumineszierenden Bauelements sind dem Fachmann bekannt. Im Weiteren sei, ohne Beschränkung der Erfindung, angenommen, dass es sich bei diesem mindestens einen organischen elektrolumineszierenden Bauelement um mindestens eine organische lichtemittierende Diode (OLED) handelt. Der Aufbau derartiger OLEDs ist beispielsweise in US 6,331,438 B1, in der oben erwähnten Veröffentlichung von B. Choudhury et al. oder in der oben beschriebenen Veröffentlichung von O. Hofmann et al. beschrieben. Weitere Möglichkeiten des Aufbaus von OLEDs sind dem Fachmann bekannt. Dabei können sowohl so genannte "Small Molecule"-Bauelemente, also Bauelemente, welche sich im Wesentlichen aus Monomeren oder Oligomeren als organische Materialien zusammensetzen, als auch, alternativ oder zusätzlich, aus organischen Polymer-Materialien zusammengesetzte Bauelemente zum Einsatz kommen. Ausführungsbeispiele letzterer Bauelemente sind beispielsweise in K.-T. Wong et al: Ter(9,9-diarylfluorene)s: Highly Efficient Blue Emitter with Promising Electrochemical and Thermal Stability, J. Am. Chem. Soc. 124, 11576, 2002 beschrieben. Auch hybride Bauelemente, das heißt Bauelemente, welche sowohl auf Small Molecules als auch auf Polymermaterialien zurückgreifen, lassen sich einsetzen. Der vorgeschlagene Aufbau ist nicht auf einen bestimmten Schichtaufbau oder eine bestimmte Materialkombination beschränkt.

Der Aufbau der OLED kann den speziellen Erfordernissen des integrierten Testelements, also beispielsweise Einsatzumgebung oder verwendeter Indikatorsubstanz (siehe unten), angepasst werden. Auf diese Weise können beispielsweise OLEDs mit unterschiedlichen spektralen Eigenschaften, insbesondere auf die eingesetzte Indikatorsubstanz angepassten Emissionseigenschaften, eingesetzt werden. So kann eine optimale Anregungswellenlänge gewählt werden. Anstelle einer einzelnen OLED können auch mehrere nebeneinander oder übereinander angeordnete OLEDs eingesetzt werden, beispielsweise eine Matrix von OLEDs. Auf diese Weise lässt sich beispielsweise auch eine Farbmischung oder Addition mehrerer OLEDs erzielen. Auch derartige Bauelemente sind aus dem Stand der Technik, insbesondere aus der Displaytechnologie, bekannt. Auch lassen sich OLEDs einsetzen, deren spektrale Emissionseigenschaften gezielt durch äußere Parameter, beispielsweise die Betriebsspannung und/oder den Betriebsstrom, beeinflusst werden können, so dass diese Bauelemente beispielsweise spektral durchstimmbar sind.

Den OLEDs ist, abgesehen von ihren Unterschieden hinsichtlich der Auswahl an Materialien und ihrer genauen Ausgestaltung hinsichtlich Form und Schichtaufbau, jeweils ein grundlegender Sandwich-Aufbau gemeinsam. Dieser Sandwich-Aufbau besteht in einer oder mehreren organischen Schichten (Small Molecules und/oder Polymere), welche zwischen zwei Elektroden, einer Anode und einer Kathode, eingebettet sind. Von diesen Elektroden gelangen Ladungsträger, Elektronen und Löcher in die organischen Materialien, wo diese transportiert werden, um anschließend aufeinander zu treffen und unter Aussendung von Photonen Licht zu emittieren. Üblicherweise werden OLEDs aus mehreren organischen Schichten aufgebaut, welche unterschiedliche Funktionen erfüllen. So können Ladungs-Injektionsschichten unmittelbar an die Elektroden angrenzen, es können Ladungstransportschichten eingesetzt werden, und es können Rekombinationsschichten eingebracht werden, in welchen eine besonders effiziente Rekombination unter Erzeugung von Photonen der gewünschten Wellenlänge erfolgen kann. Derartige Schichtaufbauten sind dem Fachmann bekannt. Auch die Auswahl geeigneter Elektrodenmaterialien ist bekannt, wobei üblicherweise ein Anoden-Material mit einer hohen Austrittsarbeit, beispielsweise transparentes Indium-Zinn-Oxid (ITO), verwendet wird. Dadurch wird die energetische Barriere zwischen dem Fermi-Niveau des Anoden-Materials und dem entsprechenden Niveau der angrenzenden organischen Schicht (z. B. dem so genannten höchsten besetzten Molekülorbital, engl. highest occupied molecular orbital, HOMO, der organischen Schicht) für eine effiziente Injektion positiver Ladungsträger möglichst klein (z. B. im Bereich weniger 100 meV) gehalten. Entsprechend wird zur Minimierung der energetischen Barriere bei der Injektion negativer Ladungsträger üblicherweise ein metallisches Kathoden-Material mit geringer Austrittsarbeit verwendet, beispielsweise Calcium oder Magnesium, gefolgt von einer Deckschicht. Auch andere Materialien sind möglich, beispielsweise die Verwendung einer dünnen Lithium-Fluorid-Schicht in Kombination mit einer Aluminium-Elektrode als Kathode. Insgesamt weisen die organischen Schichten üblicherweise Schichtdicken im Bereich zwischen 50 nm und 300 nm auf, wohingegen die Elektrodenschichten üblicherweise jeweils eine Dicke von mehreren Hundert Nanometern aufweisen.

Weiterhin weist das integrierte Testelement mindestens ein Photodetektor-Element auf. Vorzugsweise ist auch dieses mindestens eine Photodetektor-Element auf der Applikationsseite des Testelements angeordnet, wobei jedoch auch eine andere Anordnung, beispielsweise eine Rückseiten-Anordnung, möglich ist. Dabei kann das mindestens eine Photodetektor-Element, wie unten näher beschrieben, zwischen Trägerelement und der mindestens einen OLED, über der mindestens einen OLED und/oder in gleicher Ebene wie die mindestens eine OLED angeordnet sein. Auch eine Matrix mehrerer Photodetektor-Elemente ist möglich.

Als besonders vorteilhaft hat es sich erwiesen, wenn das mindestens eine Photodetektor-Element mindestens ein organisches Dünnfilm-Photodetektor-Element aufweist. Derartige organische Dünnfilm-Photodetektor-Elemente werden beispielsweise in US 5,523,555, in US 2003/0066950 A1 oder in US 5,698,048 beschrieben. Wiederum können dabei organische Monomere, Oligomere oder Polymere als organische Materialien eingesetzt werden, wobei, ähnlich zu OLEDs, auch Schichtaufbauten aus mehreren Schichten einsetzbar sind. Der Aufbau derartiger organischer Dünnfilm-Photodetektor-Elemente erfolgt dementsprechend ähnlich zum Aufbau organischer Leuchtdioden, also beispielsweise als Sandwich-Aufbau zwischen einer Indium-Zinn-Oxid-Elektrode und einer Aluminium-Elektrode. Die Einstrahlung von Licht in die organischen Schichten beziehungsweise die organische Schicht des mindestens einen organischen Dünnfilm-Photodetektor-Elements bewirkt eine Trennung von Ladungsträgern in der beziehungsweise den organischen Schichten, so dass sich eine Spannung zwischen den Elektrodenschichten ausbildet, welche erfasst werden kann. Auch eine Erfassung eines Stroms ist möglich. Das Photodetektor-Element kann für die Messung mit oder ohne eine elektrische Vorspannung betrieben werden. Auch kann bereits eine integrierte Vorverstärkerschaltung ganz oder teilweise in dem integrierten Testelement enthalten sein, beispielsweise in herkömmlicher Silizium-Technologie oder, vorzugsweise, ebenfalls in organischer Technologie, wie beispielsweise die in DE 102 53 154 A1 gezeigte organische Operationsverstärkerschaltung.

Weiterhin weist das integrierte Testelement auf der Applikationsseite mindestens eine Indikatorsubstanz auf. Diese mindestens eine Indikatorsubstanz ist ausgestaltet, um mindestens eine optische Eigenschaft, insbesondere eine Emissionseigenschaft, vorzugsweise eine Fluoreszenzeigenschaft (im Folgenden auch als Photolumineszenz bezeichnet), zu ändern, wenn die mindestens eine Indikatorsubstanz in Kontakt mit dem mindestens einen nachzuweisenden Analyten gerät. Die mindestens eine Indikatorsubstanz ist dabei derart auf der Applikationsseite des integrierten Testelements angeordnet, dass Anregungslicht, welches von dem mindestens einen organischen elektrolumineszierenden Bauelement emittiert wird, zumindest teilweise in die mindestens eine Indikatorsubstanz gelangen kann.

Die Art und Ausgestaltung der mindestens einen Indikatorsubstanz hängt ab von dem nachzuweisenden Analyten. So lassen sich prinzipiell alle der aus dem Stand der Technik bekannten Indikatorsubstanzen einsetzen, beispielsweise Farbstoffe, welche infolge einer Anwesenheit oder Abwesenheit von Sauerstoff ihr Fluoreszenzverhalten ändern. Da ein wesentlicher Anwendungsaspekt der vorliegenden Erfindung im Nachweis von Glucose in Körperflüssigkeiten liegt, sind beispielsweise die oben beschriebenen Nachweise unter Zuhilfenahme von Glucoseoxidase und entsprechender, sauerstoffdetektierender Farbstoffe entsprechend der Veröffentlichung von B. Choudhury et al. bevorzugt oder auch Nachweise unter Verwendung von Glucosedehydrogenase und NAD, wie beispielsweise in DE 103 04 448 A1 oder WO 03/097859 A2 beschrieben. Dabei ist der Begriff der Indikatorsubstanz weit zu fassen, so dass diese beispielsweise sich auch aus unterschiedlichen Indikatorsubstanzen für unterschiedliche Analyten zusammensetzen kann. Auch kann die Indikatorsubstanz beispielsweise einen Aufbau aus mehreren Schichten umfassen oder die Indikatorsubstanz kann eine Indikatormatrix mit einer oder mehreren in diese Indikatormatrix eingebrachten Indikatoren umfassen, ähnlich zu dem in US 4,889,690 beschriebenen Aufbau.

Die Funktionsweise der Indikatorsubstanz entspricht im Wesentlichen den Funktionsweisen der aus dem Stand der Technik bekannten Vorrichtungen: So reagiert die mindestens eine Indikatorsubstanz auf die Anwesenheit oder Abwesenheit des mindestens einen nachzuweisenden Analyten und ändert dementsprechend ihre Reaktion auf die Einstrahlung des von dem mindestens einen organischen elektrolumineszierenden Dünnfilm-Bauelement eingestrahlten Anregungslichts. Beispielsweise kann bei Anwesenheit des mindestens einen Analyten eine Photolumineszenz der mindestens einen Indikatorsubstanz gesteigert oder verringert werden. Mittels des mindestens einen Photodetektor-Elements wird diese Veränderung nachgewiesen und, unter Zuhilfenahme einer Ansteuer- und Auswertungselektronik, welche als separate oder auch als ganz oder teilweise in das Testelement integrierte Schaltung ausgeführt sein kann (siehe unten), aus einem bekannten Zusammenhang (z. B. einem empirisch ermittelten und abgespeicherten Zusammenhang) zwischen einer Analytkonzentration und der Photolumineszenz-Intensität bei vorgegebener Intensität des Anregungslichts auf die Analytkonzentration geschlossen werden.

Dementsprechend wird auch ein Testsystem zum Nachweis des mindestens einen Analyten vorgeschlagen, welches mindestens ein integriertes Testelement gemäß der obigen Beschreibung sowie weiterhin mindestens eine Ansteuer- und Auswerteelektronik mit Mitteln zum Ansteuern des mindestens einen organischen elektrolumineszierenden Bauelements, Mitteln zum Auslesen des mindestens einen Photodetektor-Elements und Mitteln zum Berechnen der mindestens einen Analytkonzentration aus dem bekannten Zusammenhang zwischen der Änderung der mindestens einen optischen Eigenschaft der mindestens einen Indikatorsubstanz und der Konzentration des mindestens einen Analyten umfasst.

Das vorgeschlagene integrierte Testelement und das vorgeschlagene Testsystem weisen gegenüber den aus dem Stand der Technik bekannten Testelementen und Testsystemen zahlreiche Vorteile auf. So werden im Wesentlichen die Vorteile der Verwendung eines organischen elektrolumineszierenden Bauelements mit einer Integration des mindestens einen Photodetektor-Elements verknüpft. Die Verwendung organischer elektrolumineszierender Bauelemente, insbesondere einer oder mehrerer OLEDs bewirkt eine deutliche Reduktion der Herstellungskosten, da auf teure externe Lichtquellen, wie beispielsweise anorganische Leuchtdioden, verzichtet werden kann. Die Herstellungskosten organischer Leuchtdioden liegen bei einem Bruchteil dessen, was entsprechende anorganische Bauelemente oder andere Arten von Lichtquellen in ihrer Herstellung kosten würden. Dementsprechend lassen sich die vorgeschlagenen integrierten Testelemente auch als Einweg-Testelemente realisieren, was einen erheblichen Vorteil hinsichtlich Hygiene, Zuverlässigkeit und Reproduzierbarkeit bewirkt. Weiterhin bewirkt die Integration der mindestens einen OLED in das vorgeschlagene integrierte Testelement, dass sich, im Gegensatz zu externen Lichtquellen, die Positionierung der Lichtquelle relativ zur mindestens einen Indikatorsubstanz nicht ändert, was ebenfalls die Zuverlässigkeit und Robustheit der Messung erheblich erhöht.

Auch die Integration des mindestens einen Photodetektor-Elements in das integrierte Testelement bewirkt, dass beispielsweise Fluoreszenzlicht von der mindestens einen Indikatorsubstanz immer unter gleichen räumlichen Bedingungen in das mindestens eine Photodetektor-Element gelangt. Auch dies steigert die Genauigkeit erheblich, da bei üblichen Messaufbauten bereits kleinste Änderungen in der Geometrie des Messaufbaus die Ergebnisse stark beeinflussen können. Optische Aperturen (und damit die Lichteinkopplung) werden im Wesentlichen durch die flächigen Eigenschaften der Strukturen (bedingt durch die einfachen Herstellungsverfahren wie z. B. Bedampfen, Sputtern, Drucken, Belichten etc.) bestimmt (Leuchtflecken, Blenden). Mit dem vorgeschlagenen Aufbau hingegen wird eine unmittelbare, direkte Einkopplung des zu messenden Lichtsignals in das mindestens eine Photodetektor-Element möglich, was eine verbesserte Signalqualität und Signalstärke bei gleich bleibender Anregungsenergie bewirken kann.

Weiterhin wirkt es sich vorteilhaft aus, dass alle funktionellen Komponenten des integrierten Testelements, also das mindestens eine organische elektrolumineszierende Dünnfilm-Bauelement, die mindestens eine Indikatorsubstanz und das mindestens eine Photodetektor-Element vorteilhafterweise alle auf der Applikationsseite des Testelements angeordnet sind. Auf diese Weise lassen sich, im Unterschied beispielsweise zur in der Veröffentlichung von B. Choudhury et al. beschriebenen Vorrichtung, Testelemente herstellen, welche eben sind, welche jedoch lediglich auf einer Seite empfindlich sind gegenüber mechanischen Einflüssen oder Verschmutzungen. Derartige Testelemente, beispielsweise Teststreifen, lassen sich somit mit der nicht-beschichteten Seite problemlos auf einer Unterlage auflegen, ohne die Testelemente dabei zu beschädigen. Dies stellt einen erheblichen Vorteil hinsichtlich der Handhabung derartiger Testelemente dar. Auch teure und empfindliche transparente Substrate lassen sich auf diese Weise vermeiden.

Auch die Verwendung organischer Dünnfilm-Photodetektor-Elemente führt zu sehr vorteilhaften Aufbauten der Testelemente. So lassen sich insbesondere Testelemente herstellen, welche einen hybriden Organik/Silizium-Aufbau oder sogar einen "All Organic"-Aufbau aufweisen, das heißt einen integrierten Aufbau mit integrierter Anregungsquelle, integrierter Indikatorsubstanz und integriertem Detektor, welche, abgesehen von möglichen Metall-Elektroden, vollständig aus organischen Materialien zusammengesetzt sind. Dadurch wird eine aufwändige Hybridtechnologie, welche für die Kombination anorganischer Bauelemente (z. B. anorganischer Leuchtdioden) mit organischen Bauelementen erforderlich ist, vermeidbar. Abgesehen von möglicherweise unterschiedlichen Materialien lassen sich für alle Komponenten der Testelemente ähnliche Herstellungsverfahren einsetzen.

Das vorgeschlagene integrierte Testelement und das vorgeschlagene Testsystem gemäß der obigen Beschreibung lassen sich auf verschiedene Weisen vorteilhaft weiterbilden. Eine Weiterbildung besteht darin, dass die mindestens eine Indikatorsubstanz zumindest teilweise in direktem physikalischen Kontakt mit dem mindestens einen organischen elektrolumineszierenden Bauelement steht, insbesondere an dieses angrenzt und/oder zumindest teilweise mit diesem identisch ist. Zu diesem Zweck kann beispielsweise eine Schicht der mindestens einen Indikatorsubstanz unmittelbar oder unter Zwischenschaltung einer optisch transparenten Zwischenschicht auf eine OLED aufgebracht werden. Es können jedoch auch eine Indikatorsubstanz und eine flächige OLED in "derselben Ebene" nebeneinander angeordnet sein, so dass Licht der OLED, welches parallel zur Schichtebene emittiert wird, unmittelbar in die Indikatorsubstanz gelangen kann, ohne eine der Elektroden der OLED durchdringen zu müssen. Auf diese Weise werden geringere Anforderungen an die Transparenz der Elektroden der OLED gestellt. Auch werden auf diese Weise die optischen Wege drastisch verkürzt, so dass Einflüsse von Reflexionen, Streuungen oder sonstigen Lichtverlusten verringert werden. Auch eine Abhängigkeit des Nachweises von der Bauelement-Geometrie der integrierten Testelemente wird hierdurch stark verringert.

Der unmittelbare Kontakt zwischen Indikatorsubstanz und dem mindestens einen organischen elektrolumineszierenden Bauelement kann beispielsweise auch dadurch erzeugt werden, dass die mindestens eine Indikatorsubstanz ganz oder teilweise integriert wird, insbesondere eingemischt und/oder chemisch eingebunden ist, in mindestens eine organische Schicht des mindestens einen organischen elektrolumineszierenden Bauelements. So kann beispielsweise die mindestens eine Indikatorsubstanz Bestandteil einer OLED sein, indem beispielsweise Enzyme, Coenzyme und/oder Farbstoffe, welche Bestandteil der Indikatorsubstanz sind, in eine Polymermatrix der OLED eingemischt werden und/oder als eigenständige Schicht in die OLED eingebracht werden. Auf diese Weise finden die Anregung der mindestens einen Indikatorsubstanz und die entsprechende Reaktion der mindestens einen Indikatorsubstanz, beispielsweise durch Photolumineszenz, in ein und demselben organischen Schichtaufbau statt. Dadurch wird die Ausbeute (z. B. die Zahl angeregter Indikatormoleküle pro von der OLED emittiertem Photon) erheblich erhöht, da beispielsweise ein Molekül der Indikatorsubstanz von lichtemittierenden Molekülen der OLED umgeben sein kann und somit isotrop angeregt wird. Lichtverluste lassen sich dadurch erheblich reduzieren, und es lassen sich Photodetektor-Elemente mit erheblich verringerten Effizienz-Anforderungen einsetzen.

Eine weitere vorteilhafte Ausgestaltung des integrierten Testelements besteht darin, dass das mindestens eine Trägerelement mindestens ein nadelförmiges und/oder hohlnadelförmiges und/oder lanzettenförmiges Bauteil zum Einstechen und/oder Einführen in ein Körpergewebe aufweist. So kann beispielsweise das integrierte Testelement ganz oder teilweise in Nadelform ausgestaltet sein, um beispielsweise in interstitielles Fettgewebe eingeführt zu werden. Somit lässt sich das vorgeschlagene integrierte Testelement beispielsweise auch vorteilhaft für Langzeitmessungen nutzen. Auch ein Einstechen eines hohlnadelförmigen Testelements, gefolgt von einem Ansaugen von Blut oder anderer Körperflüssigkeit oder Körpergewebe, beispielsweise mittels einer Vakuumpumpe, mittels Kapillarkräften oder mittels entsprechender Saugmaterialien, kann durchgeführt werden, wonach beispielsweise innerhalb der Hohlnadel eine Messung einer Analytkonzentration, beispielsweise eine Glucosekonzentration, erfolgt ("stechender Test" oder "messende Nadel").

Für das Aufbringen des mindestens einen organischen elektrolumineszierenden Bauelements, des mindestens einen Photodetektor-Elements und der mindestens einen Indikatorsubstanz lassen sich beispielsweise Techniken nutzen, welche aus dem Bereich der optischen Fasertechnologie bekannt sind, und bei welchen organische Schichtaufbauten, in Kombination mit Elektrodenschichten, auf optische Fasern aufgebracht werden. Derartige Techniken sind dem Fachmann bekannt und lassen sich beispielsweise aus M. Sampietro: Organic Photodetectors: A Possible Technology for On-Fiber Receivers, SPIE, Vol. 4943, 116-123, 2002, entnehmen.

Eine weitere vorteilhafte Ausgestaltung des integrierten Testelements besteht darin, dass das von dem mindestens einen organischen elektrolumineszierenden Bauelement emittierte Anregungslicht ganz oder teilweise daran gehindert werden kann, in das mindestens eine Photodetektor-Element zu gelangen. Auf diese Weise wird verhindert, dass das mindestens eine Photodetektor-Element gleichzeitig beispielsweise Anregungslicht und Fluoreszenzlicht misst, was die Auswertung des Signals erheblich erschweren würde. Eine derartige Ausgestaltung kann beispielsweise darin bestehen, dass mindestens ein optisches Filterelement und/oder mindestens ein Lichtblocker-Element, beispielsweise in Kombination mit einer entsprechenden Geometrie des Aufbaus, eingesetzt wird. So kann beispielsweise eine 90°-Geometrie verwendet werden, bei welcher, wie oben beschrieben, OLED und Indikatorschicht in einer Schichtebene liegen, wohingegen das mindestens eine Photodetektor-Element in einer anderen Schichtebene angeordnet ist. Weiterhin kann auch mindestens ein optisches Filterelement vor dem mindestens einen Photodetektor-Element angeordnet sein. Eine weitere Ausgestaltung besteht darin, dass eine OLED und ein Photodetektor-Element "nebeneinander" in einer Schichtebene angeordnet sind, getrennt von einem für das Anregungslicht zumindest teilweise nicht transparenten "Lichtblocker-Element", beispielsweise einem Photolack-Steg. Beispielsweise kann ein Photolack verwendet werden, welcher von sich aus entsprechende lichtundurchlässige Eigenschaften aufweist. Alternativ oder zusätzlich können beispielsweise auch Farbstoffe in den Photolack eingemischt werden. Auch andere Materialien für das "Lichtblocker-Element" sind denkbar, beispielsweise Kunststoffe (z. B. Polyimide) oder anorganische Materialien. Auch eine Integration des Lichtblocker-Elements in das Trägerelement ist denkbar, beispielsweise durch Ausformen als Spritzgussbauteil oder ähnliches. Über dieser Schichtebene wird dann beispielsweise eine Schicht der Indikatorsubstanz angeordnet, so dass Anregungslicht von der OLED in die Indikatorsubstanz gelangen kann, während dann von der Indikatorsubstanz emittiertes Fluoreszenzlicht wiederum in das Photodetektor-Element gelangen kann. Derartige Aufbauten, welche einfach zu realisieren sind, erleichtern die Auswertung der generierten Signale erheblich, da keine Korrektur bezüglich des Anregungslichts vorgenommen werden muss.

Eine weitere vorteilhafte Ausgestaltung des integrierten Testelements und des Testsystems besteht darin, mindestens eine Referenzeinrichtung vorzusehen. Diese vorgeschlagene mindestens eine Referenzeinrichtung ist ausgestaltet, um mindestens eine optische Eigenschaft, insbesondere eine Reflexionseigenschaft und/oder eine Emissionseigenschaft, insbesondere eine Fluoreszenzeigenschaft, in Abhängigkeit von der Intensität des von dem mindestens einen organischen elektrolumineszierenden Bauelement emittierten Anregungslichts zu ändern, wobei die Änderung der mindestens einen optischen Eigenschaft zumindest weitgehend unabhängig ist von der Anwesenheit oder Abwesenheit des mindestens einen Analyten. Diese mindestens eine optische Eigenschaft der mindestens einen Referenzeinrichtung soll mittels des mindestens einen Photodetektor-Elements messbar sein.

In anderen Worten kann die mindestens eine Referenzeinrichtung dazu verwendet werden, eine aktuelle Information über die Emissionseigenschaften der OLED und/oder die Detektionseigenschaften des mindestens einen Photodetektor-Elements zu erhalten, welche unabhängig ist von der Anwesenheit oder Abwesenheit des mindestens einen nachzuweisenden Analyten. Auf diese Weise lassen sich beispielsweise Alterungsprozesse der OLED und/oder des Photodetektor-Elements erkennen und entsprechend korrigieren. Dieser Aspekt ist von erheblicher Bedeutung, da insbesondere organische elektronische Bauelemente noch teilweise mit erheblichen Lebensdauer-Problemen und Qualitätsproblemen behaftet sind, welche eine Zuverlässigkeit oder Langzeitstabilität der Testelemente empfindlich stören könnten. Mittels der mindestens einen Referenzeinrichtung lassen sich somit, beispielsweise zu jedem Zeitpunkt einer Messung, Kalibrationsdaten gewinnen, um derartige Degradationseffekte der Bauelemente, insbesondere der organischen Bauelemente, auszugleichen. Vorzugsweise wird dabei eine statische Referenzmessung eingesetzt. Es sind jedoch auch zeitaufgelöste Referenzmessungen denkbar, beispielsweise Referenzmessungen, bei denen ein zeitliches Abklingverhalten einer Fluoreszenzreferenz aufgenommen wird. Derartige zeitaufgelöste Messungen erfordern jedoch teilweise komplexe Auswertungsschaltungen, so dass insgesamt eine statische Referenzmessung bevorzugt wird. Auch ein Einsatz der mindestens einen Referenzeinrichtung zur Qualitätskontrolle ist denkbar, beispielsweise um zu detektieren, wenn eine OLED (z. B. infolge eines Bauteilausfalls oder infolge einer altersbedingten Degradation) nicht mehr genügend Anregungslicht erzeugt, um einen Nachweis durchzuführen. In diesem Fall kann beispielsweise ein Warnsignal erzeugt werden, oder es kann eine entsprechende Fehlerroutine durchgeführt werden.

Beispielsweise kann die mindestens eine Referenzeinrichtung eine einfache Reflexionsschicht und/oder ein einfaches Referenzfluorophor, beispielsweise Titandioxid und/oder einen aus der Papierindustrie bekannten Farbaufheller und/oder das Lumineszenzpigment "LUMILUX®" der Fa. Honeywell, enthalten. Bei einer vorgegebenen Ansteuerung der OLED (z. B. einem konstanten Ansteuerstrom) wird das Signal des mindestens einen Photodetektor-Elements, welches vom Referenzfluorophor emittiertes beziehungsweise reflektiertes Licht aufnimmt, ständig gemessen. Eine Abnahme dieses Photodetektor-Element-Signals kann beispielsweise auf eine Degradation der OLED oder eine Degradation des Photodetektor-Elements hindeuten. Eine einfache Quotientenbildung mit dem ursprünglich gemessenen Photodetektor-Signal kann somit zu einem Korrekturfaktor fähren, mit welchem auch die von der mindestens einen Indikatorsubstanz stammenden Signale multipliziert werden. Auf diese Weise lassen sich auch bei Degradation der integrierten Testelemente noch zuverlässige Messwerte generieren. Auch Effekte, welche beispielsweise das Einwirken des mindestens einen nachzuweisenden Analyten beziehungsweise der Körperflüssigkeit, in welcher der mindestens eine nachzuweisende Analyt enthalten ist, auf die Bauteileigenschaften der OLED beziehungsweise des Photodetektor-Elements haben, lassen sich auf diese Weise eliminieren, beispielsweise indem eine in der mindestens einen Referenzeinrichtung enthaltene OLED und/oder ein Photodetektor-Bauelement den gleichen Bedingungen ausgesetzt sind wie entsprechende Bauelemente in den übrigen Bereichen des Testelements. Diese Weiterbildung der Erfindung trägt somit erheblich zur Einsetzbarkeit organischer elektronischer Bauteilkomponenten in der medizinischen Diagnostik bei.

Eine weitere vorteilhafte Weiterbildung besteht darin, das mindestens eine organische elektrolumineszierende Bauelement und/oder das mindestens eine Photodetektor-Element aus mehreren einzelnen Bauelementen zusammenzusetzen. Insbesondere lassen sich das mindestens eine organische elektrolumineszierende Bauelement und/oder das mindestens eine Photodetektor-Element als Matrix ausgestalten, ähnlich zu aus der DisplayTechnologie bekannten Strukturierungen. Auf diese Weise lassen sich beispielsweise einzelne Bauteilausfälle ausgleichen, oder es lassen sich bestimmte Bereiche des integrierten Testelements mit unterschiedlichen Indikatorsubstanzen ausstatten, beispielsweise zum Nachweis mehrerer unterschiedlicher Analyten.

Auch das erfindungsgemäße Testsystem gemäß der obigen Beschreibung lässt sich als solches weiter vorteilhaft ausgestalten. Entsprechend der Idee, das mindestens eine integrierte Testelement mit mindestens einer Referenzeinrichtung auszustatten, kann auch das Testsystem dahingehend weitergebildet werden, dass dieses Testsystem mindestens eine Korrekturelektronik aufweist, wobei die mindestens eine Korrekturelektronik ausgestaltet ist, um entsprechend einer mittels der mindestens einen Referenzeinrichtung gemäß der obigen Beschreibung generierten Information eine Korrektur der Berechnung der mindestens einen Analytkonzentration vorzunehmen. Es sei in diesem Zusammenhang darauf hingewiesen, dass bei dieser und bei anderen Ausgestaltungen die mindestens eine Ansteuer- und Auswerteelektronik ganz oder teilweise auf dem mindestens einen integrierten Testelement selbst angeordnet sein kann oder auch in einem separaten Auslesegerät. Bei einer Integration auf dem integrierten Testelement bietet sich beispielsweise eine integrierte Schaltung beispielsweise in Form eines herkömmlichen integrierten Schaltkreises (IC) an oder auch eine vollständige oder teilweise Realisierung als organische elektronische Schaltung. Zu letzterem Zweck lassen sich beispielsweise organische Dünnfilm-Transistorschaltungen einsetzen, welche dem Fachmann bekannt sind. Diese Weiterbildung entspricht dem oben beschriebenen Gedanken eines "All Organic"-Systems und verringert die Herstellungskosten der Testelemente zusätzlich.

Weiterhin wird erfindungsgemäß ein Verfahren zur Herstellung eines integrierten Testelements gemäß der obigen Beschreibung vorgeschlagen. Dieses Verfahren wird im Zusammenhang mit den nachfolgenden Ausführungsbeispielen näher erläutert. Diese Ausfixhrungsbeispiele sind in den Figuren dargestellt. Gleiche Bezugsziffern bezeichnen dabei baugleiche beziehungsweise in ihrer Funktion einander entsprechende Elemente.

Im Einzelnen zeigen:
- Figuren 1A bis 1E: verschiedene schematische Schichtaufbauten von Ausführungsbeispielen eines erfindungsgemäßen integrierten Testelements;
- Figuren 2A und 2B: Ausfixhrungsbeispiele eines integrierten Testelements mit einer Referenzeinrichtung;
- Figur 3: ein Ausführungsbeispiel eines Testsystems mit einem integrierten Testelement mit einer Referenzeinrichtung;
- Figur 4: einen schematischen Querschnitt durch ein integriertes Testelement entsprechend dem Aufbau in Figur 1E mit einem nadelförmigen Trägerelement;
- Figur 5: ein Ausführungsbeispiel eines Herstellungsverfahrens für ein integriertes Testelement gemäß Figur 1A;
- Figur 6: ein Verfahren zur Herstellung eines integrierten Testelements gemäß dem Ausführungsbeispiel in Figur 1C; und
- Figur 7: ein Ausführungsbeispiel eines Testsystems mit einem Messgerät und einem integrierten Testsystem.

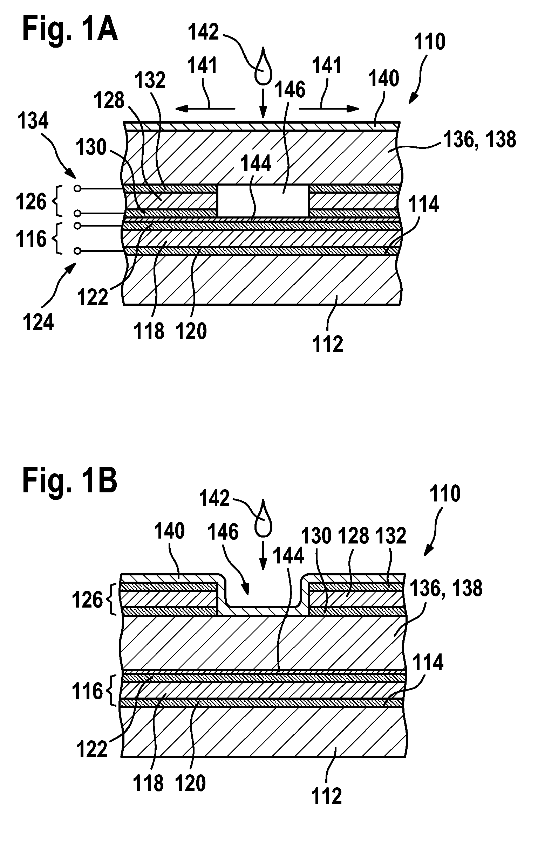

In den Figuren 1A bis 1E sind schematisch verschiedene Ausführungsbeispiele von Schichtaufbauten erfindungsgemäßer integrierter Testelemente 110 dargestellt. Die integrierten Testelemente 110 weisen alle ein Trägerelement 112 auf, welches, gemäß der obigen Beschreibung, beispielsweise als Glas-, Kunststoff-, Keramik- oder Papiersubstrat ausgestaltet sein kann und über eine Applikationsseite 114 verfügt. Weiterhin weisen die integrierten Testelemente 110 in diesen Ausführungsbeispielen gemäß Figur 1A bis Figur 1E organische Dünnfilm-Photodetektor-Elemente 116 auf. Diese organischen Dünnfilm-Photodetektor-Elemente (im Folgenden kurz "OPD" abgekürzt) sind beispielsweise gemäß dem oben zitierten Stand der Technik als Sandwich-Schichtaufbau konzipiert. Dabei sind eine oder mehrere organische Schichten 118 eingebettet zwischen eine erste Elektrode 120 und eine zweite Elektrode 122. Für die Auswahl der organischen Materialien sei beispielsweise auf US 5,698,048 oder US 2003/0066950 A1 verwiesen. Die Elektroden 120, 122 werden (z. B. durch geeignete Strukturierung oder separate Zuleitungen) mittels in Figur 1A symbolisch dargestellter Elektrodenkontakte 124 kontaktiert. Die Kontaktierung in den Ausführungsbeispielen gemäß den Figuren 1B bis 1E erfolgt analog.

Weiterhin weisen die integrierten Testelemente 110 gemäß der Ausführungsbeispiele in den Figuren 1A bis 1E organische lichtemittierende Dioden (OLEDs) 126 auf. Analog zu den OPDs 116 sind auch die OLEDs 126 als Sandwich-Schichtaufbau konzipiert, wobei eine oder mehrere organische Schichten 128 gemäß der obigen Beschreibung eingebettet sind zwischen einer ersten Elektrode 130 und einer zweiten Elektrode 132. Die erste Elektrode 130 und die zweite Elektrode 132 sind wiederum durch lediglich in Figur 1A symbolisch dargestellte Elektrodenkontakte 134 elektrisch kontaktiert.

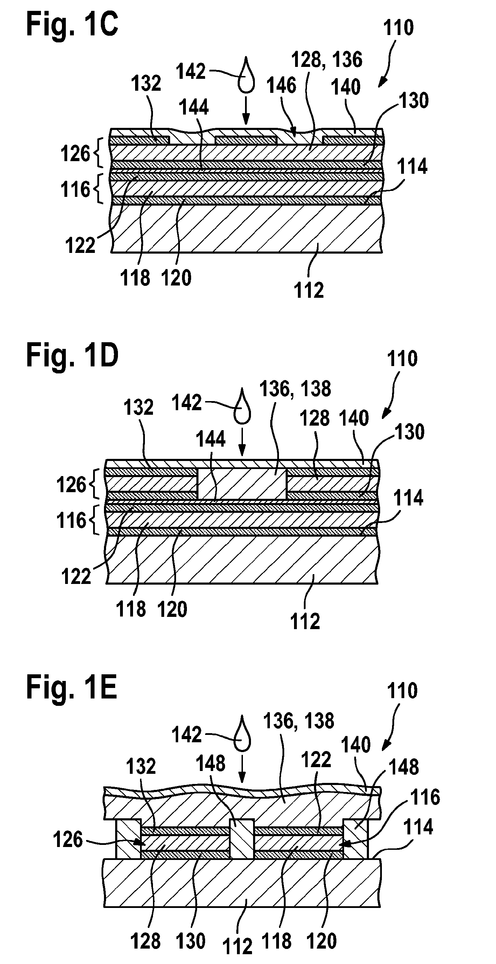

Weiterhin weisen die integrierten Testelemente 110 gemäß den Ausführungsbeispielen in den Figuren 1A bis 1E Indikatorsubstanzen 136 auf. Dabei ist in den Ausführungsbeispielen gemäß den Figuren 1A, 1B, 1D und 1E die Indikatorsubstanz 136 als separate Indikatorschicht 138 ausgebildet, wohingegen im Ausführungsbeispiel gemäß Figur 1C die Indikatorsubstanz 136 einen Bestandteil der organischen Schichten 128 der OLED 126 bildet. Die Indikatorsubstanz 126 ist gemäß der obigen Beschreibung ausgestaltet und ist auf den nachzuweisenden Analyten angepasst. Beispielsweise kann die Indikatorsubstanz gemäß den in DE 103 04 448 A1 oder WO 03/097859 A2 dargestellten Beispielen ausgebildet sein.

Weiterhin weist das integrierte Testelement 110 eine Barriereschicht 140 auf, welche das integrierte Testelement 110 abdeckt, und welche für eine in diesem Fall flüssige, den nachzuweisenden Analyten enthaltende Probe 142 zumindest bezüglich des Analyten durchlässig ist, welche aber gleichzeitig verhindert, dass Bestandteile der Indikatorsubstanz 136 austreten können. Diese Barriereschicht 140, welche optional ist und je nach Einsatzzweck auch entfallen kann, verhindert beispielsweise bei einem implantierten integrierten Testelement 110, dass als Zellgifte wirkende Enzyme oder Coenzyme aus einer Indikatorschicht 138 in die Blutbahn oder in die Körperflüssigkeit belangen können. Bei Anwendungen außerhalb des Körpers kann diese Barriereschicht 140 auch entfallen. Weiterhin kann die Barriereschicht 140 optional auch einen Einfluss auf die zu analysierende Probe 142 haben. Beispielsweise kann die Barriereschicht diese Probe 142 in verschiedene Bestandteile auftrennen. Derartige Effekte sind beispielsweise als "Sprite-Wirkung" bekannt, wobei eine Auftrennung einer Blutprobe derart erfolgt, dass rote Blutkörperchen abgetrennt werden. Derartige Schichten mit "Sprite-Wirkung", mittels derer Plasma aus Vollblut abgetrennt werden kann, sind beispielsweise aus EP 0 457 183 A1 oder aus US 2004/0222168 A1 bekannt, wobei beispielsweise die EP 0 457 183 A1 in der Schicht Glasfasern verwendet, welche mit Polyvinylalkohol/Polyvinylacetat überzogen sind. Auch andere Schichten mit gleichen oder ähnlichen Wirkungen lassen sich einsetzen. Diese "Sprite-Funktion" ist in Figur 1A symbolisch durch die Pfeile 141 dargestellt. Bei extra-korporalen Anwendungen ist eine Verwendung biokompatibler Materialien nicht notwendigerweise erforderlich. In diesem Fall besteht eine größere Freiheit hinsichtlich der Auswahl der Materialien der Barriereschicht 140, so dass beispielsweise ein Polyurethan auch andere Kunststoffe, wie beispielsweise Polyimide, oder auch anorganische Deckmaterialien verwendet werden können.

Die Ausführungsbeispiele der integrierten Testelemente 110 gemäß den Figuren 1A bis 1E unterscheiden sich in der Anordnung und Reihenfolge der OPDs 116, der OLEDs 128 und der Indikatorsubstanz 136. So ist im Ausführungsbeispiel gemäß Figur 1A in einer vom Trägerelement 112 aus betrachtet ersten Schichtebene der OPD 116 angeordnet. An den OPD 116, welcher in diesem Ausführungsbeispiel als großflächiger OPD ausgestaltet ist (auch eine andere Aufteilung ist möglich), folgt ein optisches Filterelement 144, welches beispielsweise als organische Schicht (z. B. eine oder mehrere Polymerschichten) oder als anorganische Schicht aufgebaut sein kann, und welches verhindert, dass Anregungslicht von der OLED 126 in den OPD 116 gelangt. In einer zweiten Schichtebene sind dann auf dieses optische Filterelement 144 die OLEDs 126 aufgebaut. In der Darstellung gemäß Figur 1A bestehen diese OLEDs aus mehreren einzelnen OLEDs 126, zwischen denen ein Zwischenraum 146 verbleibt. In der Praxis wird sich auch dieser Zwischenraum 146 ganz oder teilweise mit Indikatorsubstanz 136 füllen, was jedoch die Funktionsweise des Bauelements nicht beeinträchtigt.

In einer dritten Schichtebene ist schließlich auf den OLEDs 126 die Indikatorschicht 138 aufgebracht, welche durch die Barriereschicht 140 nach außen abgeschlossen ist. Als Material für die Barriereschicht kann beispielsweise ein Polyurethan oder die oben genannten Materialien mit Sprite-Wirkung verwendet werden.

Bei diesem "dreischichtigen" Aufbau gemäß Figur 1A gelangt Anregungslicht von den OLEDs 126, bei denen vorzugsweise die zweite Elektrode 132 als transparente Elektrode (beispielsweise als ITO-Elektrode oder dünne, transparente Metall-Elektrode) ausgestaltet ist, in die Indikatorschicht 138. Dort wird, in Abhängigkeit von der Anwesenheit oder Abwesenheit des nachzuweisenden Analyten, insbesondere Glucose, eine Photolumineszenz angeregt. Diese Photolumineszenz ist in der Regel von längerer Wellenlänge als das Anregungslicht. So hat es sich in der Praxis als vorteilhaft erwiesen, OLEDs 126 mit blauem Emissionslicht zu verwenden, wie es beispielsweise in dem oben zitierten Artikel von K.-T. Wong et al. mittels geeigneter Fluoren-Verbindungen realisiert werden kann. Das längerwellige Photolumineszenzlicht gelangt dann im Aufbau gemäß Figur 1A durch den Zwischenraum 146 (und teilweise auch durch die OLEDs 128 selbst) und durch das optische Filterelement 144 in den OPD 116, dessen zweite Elektrode 122 zu diesem Zweck wiederum vorteilhafterweise ganz oder teilweise transparent ausgestaltet ist, analog zur zweiten Elektrode 132 der OLED 126. Das optische Filterelement 144 ist so gewählt, dass das Photolumineszenzlicht der Indikatorschicht 138 nicht oder nur unwesentlich blockiert wird.

In Figur 1B ist ein Ausführungsbeispiel dargestellt, welches, analog zur Figur 1A, ebenfalls dreischichtig ist. Im Gegensatz zur Figur 1A ist dabei allerdings die Anordnung der OLEDs 126 und der Indikatorschicht 138 in der Reihenfolge vertauscht. So schließt sich in diesem Beispiel an den OPD 116 die Indikatorschicht 138 an, an welche sich wiederum die OLEDs 126 anschließen. In diesem Fall schließt sich die Barriereschicht 140 an die OLEDs 126 an, wobei die Probe 142 durch den Zwischenraum 146 zwischen den OLEDs 126 zur Indikatorschicht 138 gelangen kann. In diesem Ausführungsbeispiel gemäß Figur 1B sind zweckmäßigerweise die ersten Elektroden 130 der OLEDs 126 transparent ausgestaltet, damit Anregungslicht von den OLEDs 126 in die Indikatorschicht 138 gelangen kann. Analog zu Figur 1A ist beim OPD 116 die zweite Elektrode 122 transparent ausgestaltet, damit Photolumineszenzlicht von der Indikatorschicht 138 in die organischen Schichten 118 des OPDs 116 gelangen kann.

In den Ausführungsbeispielen gemäß den Figuren 1C und 1D sind jeweils zweischichtige Aufbauten dargestellt. Diese sind jedoch auf unterschiedliche Weise realisiert. So ist im Ausführungsbeispiel gemäß Figur 1C, wie oben beschrieben, die Indikatorsubstanz 136 in eine oder mehrere organische Schichten 128 der OLED 126 eingemischt. Auf diese Weise fallen Anregungslichtquelle und Indikatorfunktion innerhalb der OLED 126 zusammen. Dies beinhaltet, wie oben beschrieben, den Vorteil einer höheren Lichtausbeute. Wiederum ist im Ausführungsbeispiel gemäß Figur 1C der OPD 116 großflächig ausgestaltet, wobei auch andere Ausgestaltungen möglich sind. An diesen in einer ersten Schichtebene angeordneten OPD 116 schließt sich das optische Filterelement 144 an, gefolgt von der OLED 126 in einer zweiten Schichtebene. Dabei ist die zweite Elektrode 132 der OLED 126 in diesem Ausführungsbeispiel strukturiert, so dass zwischen den Abschnitten dieser zweiten Elektrode 132 Zwischenräume 146 frei bleiben, durch welche die Probe 142 in die organischen Schichten 128 der OLED eindringen kann.

Die Barriereschicht 140 schützt in diesem Ausführungsbeispiel, wie auch im Ausfixhrungsbeispiel gemäß den Figuren 1B und 1D, gleichzeitig die zweiten Elektroden 132 der OLEDs 126. Die Strukturierung der zweiten Elektroden 132 der OLEDs 126 kann dem Bedarf des integrierten Testelements 110 angepasst sein, also beispielsweise einen rechteckigen oder kreisförmigen Zwischenraum 146 aufweisen, um beispielsweise einen Blutstropfen als flüssige Probe 142 applizieren zu können.

In Figur 1D ist ein Schichtaufbau dargestellt, welcher analog zur Figur 1C ebenfalls zweischichtig ist. Dabei ist allerdings die Indikatorsubstanz 136 nicht in die organischen Schichten 128 der OLED 126 eingemischt, sondern liegt in einer separaten Indikatorschicht 138 vor, welche in derselben Schichtebene wie die OLEDs 126 angeordnet ist. Zu diesem Zweck weist das integrierte Testelement 110 gemäß Figur 1D zunächst wiederum einen OPD 116 auf, welcher in einer ersten Schichtebene angeordnet ist, und an welchen sich ein optisches Filterelement 144 anschließt. Auf dem optischen Filterelement 144 sind diskrete OLEDs 126 angeordnet, welche jedoch die zweite Schichtebene nicht vollständig ausfüllen, und zwischen denen eine Indikatorschicht 138 eingebracht ist. Dieser zweischichtige Aufbau wird wiederum abgeschlossen durch eine Barriereschicht 140.

In diesem Ausfixhrungsbeispiel gemäß Figur 1D werden die OLEDs 126 als so genannte "Kantenemitter" genutzt. Bei derartigen Kantenemittern tritt das von den organischen Schichten 128 erzeugte Anregungslicht nicht durch eine der beiden Elektroden 130, 132 aus, sondern tritt parallel zur Schichtebene, also parallel zu den Elektrodenschichten 130, 132 aus und wird in die Indikatorschicht 138 geleitet. Aus diesem Grund muss in diesem Ausfiihrungsbeispiel gemäß Figur 1D auch keine der Elektroden 130, 132 notwendigerweise transparent ausgestaltet sein. Dies bietet erhebliche Vorteile, da die Herstellung einer transparenten Elektrode, insbesondere einer ITO-Elektrode, in der Praxis mit erheblichen Schwierigkeiten verbunden sein kann, insbesondere wenn diese transparente Elektrode, welche üblicherweise durch einen aggressiven Herstellungsprozess (verschiedene Plasmaprozesse) erzeugt wird, auf einen darunter liegenden organischen Schichtaufbau aufgebracht werden soll. Im Ausführungsbeispiel gemäß Figur 1D wird diese Problematik vermieden, da in diesem Fall beispielsweise beide Elektroden 130, 132 als Metall-Elektroden ausgestaltet sein können, welche erheblich einfacher herzustellen sind als transparente Elektroden.

Analog zur obigen Beschreibung regt das Anregungslicht der OLED 126 in der Indikatorschicht 138 die Indikatorsubstanz 136, in Abhängigkeit von der Anwesenheit oder Abwesenheit des Analyten, zur Photolumineszenz an. Dieses Photolumineszenzlicht gelangt dann durch die transparente zweite Elektrode 122 des OPDs 116 in die organischen Schichten 118 des OPDs 116 und erzeugt ein entsprechendes Signal. Anregungslicht und Photolumineszenzlicht sind also in diesem Ausführungsbeispiel in einer "90°-Anordnung". Je nach Geometrie, das heißt insbesondere je nach Abstand der einzelnen OLEDs 126 zueinander, wird allein durch diesen 90°-Aufbau weitgehend verhindert, dass Anregungslicht von den OLEDs 126 in den OPD 116 gelangen kann. Insofern sind die Anforderungen an das optische Filterelement 144 in diesem Ausführungsbeispiel erheblich geringer, so dass unter Umständen auf dieses optische Filterelement 144 auch ganz verzichtet werden kann.

In Figur 1E ist schließlich ein weiteres zweischichtiges Ausführungsbeispiel dargestellt, bei welchem die OLED 126 und der OPD 116 in einer ersten Schichtebene angeordnet sind, gefolgt von einer Indikatorschicht 138 in einer darüberliegenden zweiten Schichtebene. In diesem Ausführungsbeispiel sind jeweils die zweiten Elektroden 122, 128 des OPDs 116 und der OLED 126 transparent ausgestaltet. Zwischen OLED 126 und OPD 116 sind Lichtblocker-Elemente 148 eingebracht, welche verhindern, dass Anregungslicht von der OLED 126 in den OPD 116 gelangen kann. Diese Lichtblocker-Elemente 148 sind in diesem Ausführungsbeispiel als Trennstege ausgebildet, welche beispielsweise mittels eines lithographischen Photolackprozesses erzeugt werden können. So können die Trennstege beispielsweise aus Photolack bestehen, wobei der Photolack zusätzlich eingefärbt sein kann, um die Undurchlässigkeit gegenüber Licht der Anregungswellenlänge zu erhöhen. Zusätzlich kann jedoch noch auf die zweite Elektrode 122 des OPDs 116 ein (in Figur 1E nicht dargestelltes) optisches Filterelement 144 aufgebracht werden, welches ein Übersprechen von Anregungslicht über die Indikatorschicht 138 in den OPD 116 zusätzlich unterdrückt.

Anregungslicht gelangt in diesem Ausführungsbeispiel gemäß Figur 1E von der OLED 126 durch die transparente zweite Elektrode 132 in die Indikatorschicht 138, regt dort, in Abhängigkeit von der Anwesenheit oder Abhängigkeit des nachzuweisenden Analyten, Photolumineszenz an, wobei das Photolumineszenzlicht durch die transparente zweite Elektrode 122 in die organischen Schichten 118 des OPDs 116 eintritt, um so detektiert zu werden. Wiederum ist die Indikatorschicht 138 nach außen durch die Barriereschicht 140 abgeschlossen. Der Aufbau gemäß Figur 1E ist vergleichsweise einfach und kostengünstig herzustellen, da OPD 116 und OLED 126 im Wesentlichen gleiche Aufbauverfahren erfordern und lediglich unterschiedliche organische Schichten 118, 128 aufweisen. Auch kann zwischen die erste Schichtebene mit den OLEDs 126 und den OPDs 116 und die zweite Schichtebene mit der Indikatorsubstanz 136 eine zusätzliche Barriereschicht (nicht dargestellt) eingebracht werden, um beispielsweise die OLEDs 126 beziehungsweise OPDs 116 vor chemischen Einwirkungen der Indikatorschicht 138 zu schützen. Anschließend an den Aufbau der OLEDs 126 beziehungsweise OPDs 116 erfolgt dann ein Aufbringen der Indikatorschicht 138, was durch einen Beschichtungsprozess mit erheblich geringeren Qualitätsanforderungen erfolgen kann als bei den OLEDs 126 beziehungsweise OPDs 116, beispielsweise durch ein einfaches Tauchverfahren (siehe unten). Insofern bietet der Aufbau gemäß Figur 1E zahlreiche Vorteile.

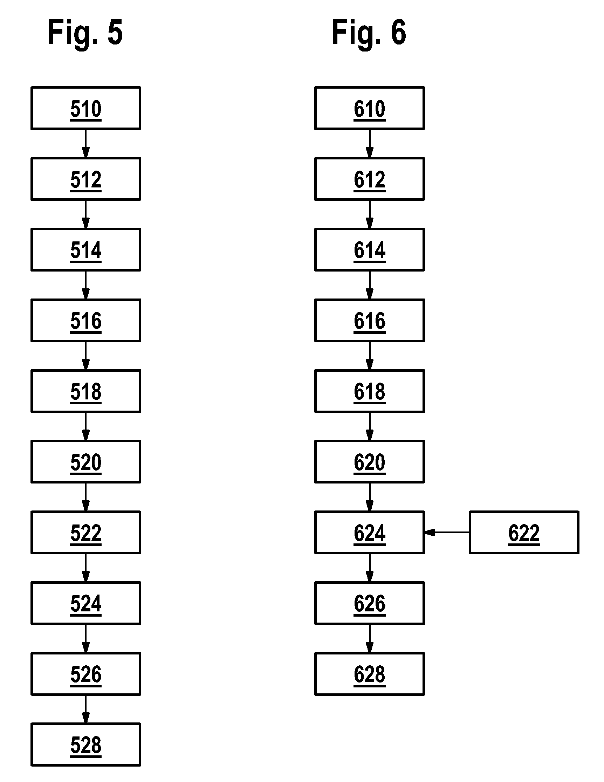

Die Herstellung eines integrierten Testelements 110 soll exemplarisch am Beispiel der Testelemente 110 gemäß den Figuren 1A und 1C unter Bezugnahme auf die Figuren 5 und 6 beschrieben werden. Dabei beschreibt das Herstellungsverfahren gemäß Figur 5 die Herstellung eines integrierten Testelements 110 gemäß dem Beispiel in Figur 1A, wohingegen das Verfahren gemäß Figur 6 zu einem integrierten Testelement 110 gemäß dem Beispiel in Figur 1C führt. Die Verfahrensschritte sind in den Figuren 5 und 6 schematisch in einer bevorzugten Reihenfolge dargestellt. Es sei darauf hingewiesen, dass neben den dargestellten Verfahrensschritten noch weitere, nicht dargestellte Verfahrensschritte durchgeführt werden können, und dass die Verfahrensschritte nicht notwendigerweise in der dargestellten Reihenfolge durchgeführt werden müssen. Auch können einzelne Verfahrensschritte wiederholt durchgeführt werden.

Bei der Herstellung eines integrierten Testelements 110 gemäß dem Aufbau in Figur 1 A mit dem in Figur 5 dargestellten Verfahren bildet das Trägerelement 112 die Ausgangsbasis. Auf dieses Trägerelement 112 wird in Verfahrensschritt 510 die erste Elektrode 120 des OPDs 116 auf das Trägerelement 112 aufgebracht. Wie oben beschrieben, muss es sich bei dieser ersten Elektrode 120 nicht notwendigerweise um eine transparente Elektrode handeln, so dass diese Elektrode beispielsweise als Metall-Elektrode, beispielsweise als Aluminium-Elektrode, ausgestaltet sein kann. Das Aufbringen der ersten Elektrode 120 kann somit beispielsweise mittels eines konventionellen Aufdampf- oder Sputterprozesses erfolgen. Auch andere Arten der Aufbringung sind möglich, beispielsweise Chemical Vapor Deposition (CVD) oder sogar die Verwendung leitfähiger Polymermaterialien als Elektroden, welche beispielsweise aufgedruckt oder aufgeschleudert werden können.

Dieser erste Verfahrensschritt 510 des Verfahrens gemäß Figur 5 ist nicht notwendigerweise Bestandteil des Herstellungsverfahrens, sondern es können unter Umständen auch Substrate als Trägerelemente 112 kommerziell bezogen werden, welche diese erste Elektrode 120 des OPDs 116 bereits beinhalten, beispielsweise Substrate, welche bereits herstellerseitig mit einer Elektrodenschicht (z. B. ITO) beschichtet sind.

In Verfahrensschritt 512 wird die erste Elektrode 120 des OPDs 116 strukturiert. Die Art der Strukturierung hängt ab von der Beschaffenheit der ersten Elektrode 120. Werden beispielsweise ITO- oder Metall-Elektroden als erste Elektrode 120 verwendet, so bietet sich beispielsweise ein Ätzprozess an, bei welchem die erste Elektrode 120 in einem geeigneten Ätzbad unter Zuhilfenahme eines lithographischen Prozesses an den unerwünschten Stellen von der Applikationsseite 114 beseitigt wird. Alternativ lässt sich beispielsweise auch ein Laserablationsverfahren einsetzen. Laserablationsverfahren können beispielsweise auch eingesetzt werden, um notwendige Leiterbahnen zu erzeugen, beispielsweise für eine Chip-Integration in das integrierte Testelement 110 und/oder für komplexe Elektrodengeometrien, beispielsweise im Rahmen von nadelförmigen integrierten Testelementen 110. Auch andere Elektroden oder Leiterbahnen als die erste Elektrode 120 lassen sich auf diese Weise strukturieren.

Alternativ zu Verfahrensschritt 512 lassen sich auch bereits in Verfahrensschritt 510 beim Aufbringen der ersten Elektrode 120 Verfahren einsetzen, mittels derer die erste Elektrode 120 bereits strukturiert auf das Trägerelement 112 aufgebracht wird. In jedem Fall lassen sich, ob durch Strukturieren beim Aufbringen oder nachträgliches Strukturieren gemäß Verfahrensschritt 512, auf diese Weise erste Elektroden 120 des OPDs 116 herstellen, welche beispielsweise Zuleitungen enthalten oder großflächige Abschnitte, auf denen der OPD 116 aufgebaut wird.

In Verfahrensschritt 514 wird die mindestens eine organische Schicht 118 des OPDs 116 aufgebracht. Für die Art und Beschaffenheit dieser organischen Schichten sei auf den oben genannten Stand der Technik verwiesen, beispielsweise auf US 5,698,048. Entsprechend der Beschaffenheit der organischen Materialien lassen sich in diesem Schritt beispielsweise nasschemische Verfahren einsetzen (z. B. Spin Coating, Aufdrucken einer Lösung oder ähnliche nasschemische Verfahren), oder es können auch Gasphasen-Prozesse eingesetzt werden, wie beispielsweise Chemical Vapor Deposition (CVD) oder Physical Vapor Deposition (PVD), beispielsweise ein Aufdampfen im Vakuum. Dabei bieten sich naturgemäß nasschemische Prozesse eher für Polymere und Oligomere an, wohingegen Gasphasen-Prozesse sich eher eignen für Monomere als organische Materialien (Small Molecules). Insgesamt ist es von Vorteil, so viele der hier beschriebenen Verfahrensschritte an einen großtechnischen Endlos-Serienproduktionsprozess, beispielsweise einen so genannten "Reel-to-Reel-Prozess" anzupassen, so dass insgesamt beispielsweise bevorzugt Drucktechniken und/oder Laminiertechniken oder ähnliche Großserienprozesse für das hier beschriebene Verfahren zu wählen sind.

Auch dieses Aufbringen der organischen Schichten 118 in Verfahrensschritt 514 kann wiederum strukturiert erfolgen. So kann beispielsweise ein Aufdampfen organischer Schichten durch eine entsprechende Schattenmaske erfolgen. Auf diese Weise können Bereiche des integrierten Testelements 110, in welchen keine organischen Schichten 118 erwünscht sind, unbedeckt bleiben. Alternativ oder zusätzlich, und dies wird sich insbesondere bei nasschemischen Prozessen anbieten, können auch Bereiche nachträglich freigelegt werden, beispielsweise mittels eines lithographischen Prozesses oder eines Abtragprozesses, beispielsweise eines Laserablationsprozesses.

Anschließend wird in Verfahrensschritt 516 die zweite Elektrode 122 des OPDs 116 aufgebracht. Zum Verfahren sei hierbei auf Verfahrensschritt 510 verwiesen. Allerdings besteht im Aufbau gemäß Figur 1A die Schwierigkeit, dass die zweite Elektrode 122 zumindest teilweise transparent sein sollte für Photolumineszenzlicht, welches von der Indikatorschicht 138 emittiert wird. Dementsprechend kann hier beispielsweise mit einer dünnen Metallschicht, welche noch eine genügende Transparenz aufweist (z. B. eine Metallschicht von wenigen 10 nm), gearbeitet werden. Alternativ kann auch eine ITO-Elektrode verwendet werden, wobei üblicherweise mittels eines Sputterprozesses ITO auf den organischen Schichten 118 abgeschieden wird.

Auch hierbei kann wieder eine Strukturierung der zweiten Elektrode 122 bereits während des Aufbringens erfolgen, oder es kann eine nachträgliche Strukturierung durchgeführt werden. Aufgrund der Empfindlichkeit der organischen Schichten 118 gegenüber nachträglichen Strukturierungsprozessen ist es bevorzugt, die zweite Elektrode 122 des OPDs 116 bereits strukturiert aufzubringen, das heißt beispielsweise durch Auftrag durch eine entsprechend gestaltete Schattenmaske.

In Verfahrensschritt 518 wird das optische Filterelement 144 auf die zweite Elektrode 122 des OPDs 116 aufgebracht. Wiederum wird der Fachmann einen Prozess wählen, welcher an die Art und Beschaffenheit des optischen Filterelements 144 angepasst ist. Wie oben beschrieben, kann es sich beispielsweise bei dem optischen Filterelement um eine oder mehrere Schichten eines Polymers handeln, so dass sich auch hier wiederum ein nasschemischer Prozess anbietet. Auch Monomere oder Oligomere können eingesetzt werden oder organische Substanzen, welche in situ, das heißt nach dem Aufbringen, vernetzen oder polymerisieren. Entsprechend lassen sich auch wieder Gasphasenprozesse einsetzen. Auch anorganische Materialien können verwendet werden. Eine weitere Möglichkeit besteht darin, das optische Filterelement 144 als Folie oder so genannte "Stand Alone-Schicht" aufzubringen, beispielsweise indem eine Folienschicht eines optischen Filterelements 144 als ganze auf den OPD 116 aufgelegt oder aufgeklebt wird.

Anschließend werden in Verfahrensschritt 520 die ersten Elektroden 130 der OLED 126 auf das optische Filterelement 144 aufgebracht. Da es sich in diesem Ausführungsbeispiel nicht notwendigerweise um transparente Elektroden handeln muss (transparente Elektroden sind hier sogar von Nachteil, da Anregungslicht dann direkt in den OPD 116 gelangen würde), kann es sich beispielsweise um Metallelektroden handeln. Somit sei auf Verfahrensschritt 510 verwiesen. Auch hier bietet sich jedoch an, die Elektroden 130 bereits strukturiert (z. B. mittels einer Schattenmaskentechnik oder einer geeigneten Drucktechnik) aufzubringen, um nachfolgende Strukturierungsschritte zu vermeiden, welche die darunter bereits aufgebrachten Schichten wieder beschädigen könnten. Alternativ oder zusätzlich ist jedoch auch eine nachträgliche Strukturierung der ersten Elektroden 130 der OLED 126 möglich.

In Verfahrensschritt 522 wird die mindestens eine organische Schicht 128 der OLED 126 auf die ersten Elektroden 130 aufgebracht. Wiederum ist vorzugsweise der Beschichtungsprozess auf die Art und Beschaffenheit der eingesetzten organischen Materialien angepasst, so dass in diesem Zusammenhang auf Verfahrensschritt 514 verwiesen werden kann. Allerdings ist in Verfahrensschritt 522 in der Regel eine Strukturierung der organischen Schichten 128 der OLED 126 erforderlich, da im Ausfiihrungsbeispiel gemäß Figur 1A der Zwischenraum 146 erzeugt werden muss, durch welchen Photolumineszenzlicht von der Indikatorschicht 138 zum OPD 116 gelangen kann. Alternativ ist es jedoch auch möglich, dass das Photolumineszenzlicht die OLEDs 126 durchdringt. In letzterem Fall wäre es sinnvoll, auch die erste Elektrode 130 der OLEDs 126 transparent zu gestalten. Für die Strukturierung der organischen Schichten 128 der OLED 126 bietet sich im Falle eines Aufbringens aus der Gasphase beispielsweise wiederum eine Schattenmaskentechnik an. Im Falle eines nasschemischen Auftrags lassen sich beispielsweise Drucktechniken (z. B. Ink-Jet-Printing, Siebdrucken oder Rollen-Offset) einsetzen. Auch eine nachträgliche Strukturierung, beispielsweise mittels Laserablation oder lithographischer Techniken, ist wiederum denkbar, jedoch aufgrund der Empfindlichkeit der bereits darunter aufgebrachten Schichten weniger bevorzugt.

Anschließend werden in Verfahrensschritt 524 die zweiten Elektroden 132 der OLED 126 aufgebracht. Vorteilhafterweise handelt es sich, wie oben beschrieben, dabei im Ausführungsbeispiel gemäß Figur 1A um transparente Elektroden, so dass für die Aufbringung auf Verfahrensschritt 516 verwiesen werden kann. Allerdings ist in diesem Fall in der Regel wiederum eine Strukturierung erforderlich, um den Zwischenraum 146 zu erzeugen. Somit bietet sich wiederum eine Schattenmaskentechnik an. Auch andere Techniken sind jedoch denkbar. Anschließend wird in Verfahrensschritt 526 die Indikatorschicht 138 aufgebracht. Auch hier hängt die Beschichtungstechnologie wiederum von der Wahl der Materialien ab. So kann beispielsweise eine Indikatorsubstanz 136, beispielsweise eine Mischung aus Enzymen, Coenzymen und Farbstoffen, in eine organische Matrix, beispielsweise eine Polymermatrix oder ein Gel (siehe z. B. DE 103 04 448 A1 oder WO 03/097859 A2), eingebracht werden. Das Material dieser Matrix sollte zumindest hinsichtlich des Analyten zumindest teilweise durchlässig für die Probe 142 sein, damit der Analyt zur Indikatorsubstanz 136 gelangen kann. Zum Aufbringen bieten sich dann beispielsweise nasschemische Verfahren, wie z. B. Drucken, Aufschleudern oder auch einfache Tauch- oder Tropfverfahren, an. Eine Strukturierung ist in der Regel nicht erforderlich, kann jedoch zusätzlich erfolgen, beispielsweise um Elektrodenkontakte 116, 126 der OPDs 116 oder OLEDs 126 für eine Kontaktierung freizulegen.

Anschließend wird, optional, in Verfahrensschritt 528 die Barriereschicht 140 aufgebracht, beispielsweise ebenfalls durch ein Tauchverfahren oder durch ein Aufbringen aus der Gasphase. Auch ein Aufbringen als separates Bauteil, beispielsweise in Form einer fertigen, aufklebbaren Folie, ist denkbar, ebenso wie auch für die Indikatorschicht 138.

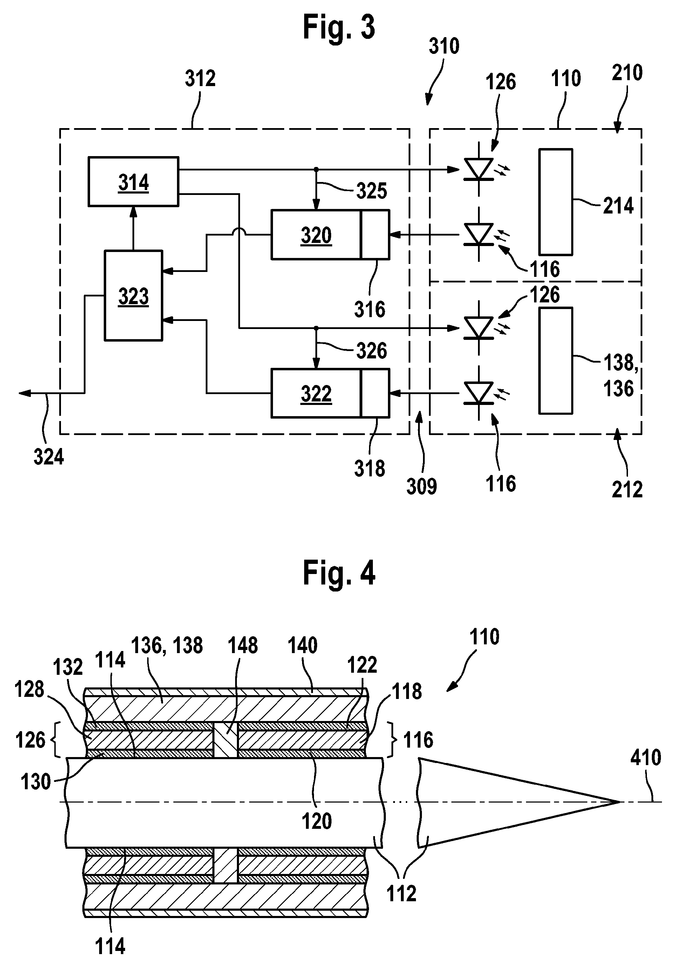

Nach Verfahrensschritt 528 ist das integrierte Testelement 110 prinzipiell betriebsbereit. Es kann sich dann ein Testen, Kalibrieren oder ähnliches anschließen, um, beispielsweise für eine bestimmte Charge an integrierten Testelementen 110, den Zusammenhang zwischen Analytkonzentration und OPD-Signal zu ermitteln oder die einzelnen Komponenten zu testen. So können beispielsweise Stichproben einer Charge von Testelementen 110 gemessen werden, wonach eine Korrekturfunlction ermittelt wird, mit welcher diese Charge codiert wird und welche in der Korrekturelektronik (z. B. einem Steuerprozessor 323 und/oder einer ersten Auswerteelektronik 320, siehe unten zu Fig. 3) gespeichert wird und gegebenenfalls über ein Display ausgegeben werden kann.

Analog zu Figur 5 soll anhand des schematischen Ablaufplans in Figur 6 der Aufbau des integrierten Testelements 110 gemäß dem Ausführungsbeispiel in Figur 1C erläutert werden. Der Aufbau bis hin zur ersten Elektrode 130 der OLED entspricht im Wesentlichen dem Ausführungsbeispiel gemäß Figur 1A, auch wenn in diesem Ausführungsbeispiel gemäß Figur 1C die erste Elektrode 130 der OLED 126 nicht strukturiert ist. Alternativ oder zusätzlich kann auch hier eine Strukturierung erfolgen. Entsprechend dem ähnlichen oder identischen Aufbau entsprechen die Verfahrensschritte 610 bis 620 den Verfahrensschritten 510 bis 520 gemäß dem Verfahren in Figur 5. Allerdings ist hierbei zu berücksichtigen, dass die erste Elektrode 130 der OLED 126 im Ausführungsbeispiel gemäß Figur 1C vorzugsweise transparent ist, so dass sich leichte Unterschiede hinsichtlich des Verfahrensschritts 620 im Vergleich zu Verfahrensschritt 520 ergeben, welche auf einer unterschiedlichen Materialauswahl (z. B. ITO oder eine dünne Metall-Elektrode) in dem Beispiel gemäß Figur 1C beruhen. Diese Unterschiede sind für den Fachmann jedoch nachzuvollziehen und zu ergänzen.

Parallel zur oder anschließend an die Durchführung der Verfahrensschritte 610 bis 620 wird das Aufbringen der Indikatorschicht 138 vorbereitet. Zu diesem Zweck wird in Verfahrensschritt 622 die Indikatorsubstanz (also beispielsweise ein Gemisch aus Enzymen, Coenzymen und Farbstoffen, siehe oben) in ein oder mehrere organische Materialien der organischen Schichten 128 der OLED 126 eingemischt. Werden beispielsweise Polymer-OLEDs eingesetzt, so kann dieses Einmischen dadurch erfolgen, dass beim Herstellen von Polymerlösungen, welche üblicherweise für ein nasschemisches Auftragen der Polymerschichten der OLED 126 verwendet werden, die Indikatorsubstanz 136 eingerührt wird. Dabei ist auf eine Verträglichkeit der Indikatorsubstanz mit den für die Lösungen zu verwendenden Lösungsmitteln zu achten. Eine Auswahl der Schicht kann dementsprechend erfolgen. Beispielsweise können Indikatorsubstanzen, welche unverträglich gegenüber organischen Lösungsmitteln reagieren, in wässrige Lösungen eingemischt werden, welche üblicherweise für einen Teil der organischen Schichten 128 der OLED 126 verwendet werden.

Entsprechend werden dann in Verfahrensschritt 624 die organischen Schichten 128 der OLED 126 aufgebaut, beispielsweise durch einen nasschemischen Prozess, beispielsweise durch Aufschleudern oder Aufdrucken. Dabei wird für eine oder mehrere der mindestens einen organischen Schicht 128 der OLED 126 die in Verfahrensschritt 622 vorbereitete Mischung der Indikatorsubstanz mit einer OLED-Substanz verwendet. Anstelle einer Lösung kann sinngemäß natürlich auch eine Dispersion oder Suspension verwendet werden. So werden in Verfahrensschritt 624 also die organischen Schichten 128 der OLED 126 aufgebracht.

Alternativ zu dem in Figur 6 dargestellten Ausführungsbeispiel des Verfahrens sind auch Verfahren möglich und von der Erfindung erfasst, bei welchem Verfahrensschritt 622 und 624 zumindest teilweise zusammengefasst werden. So kann das Einmischen der Indikatorsubstanz 136 in eine oder mehrere der organischen Schichten 128 der OLED 126 auch alternativ oder zusätzlich erst während dem Aufbringen der organischen Schichten 128 der OLED 126 erfolgen. Bei einem nasschemischen Prozess kann dies beispielsweise dadurch erfolgen, dass gleichzeitig eine Lösung einer Indikatorsubstanz und eine Lösung einer OLED-Substanz aufgeschleudert oder aufgedruckt werden. Bei einem Aufbringen aus der Gasphase bieten sich beispielsweise ein Co-Verdampfungs- oder Co-Sputterprozess oder ein Aufbringen aus mehreren chemischen Quellen in einem CVD-Prozess an.

In Verfahrensschritt 626 wird dann die zweite Elektrode 132 der OLED 126 aufgebracht, analog zu Verfahrensschritt 524 in Figur 5. Auch hier erfolgt vorzugsweise wiederum ein strukturiertes Aufbringen, beispielsweise durch ein Aufdampfen mittels einer Schattenmaske. Auf diese Weise werden die Zwischenräume 146 generiert, durch welche die Probe 142 in die organischen Schichten 128 der OLED 126 eindringen oder zu diesen gelangen kann.

Anschließend wird im Verfahrensschritt 628 analog zu Verfahrensschritt 528 im Ausführungsbeispiel gemäß Figur 5 die Barriereschicht 140 aufgebracht.

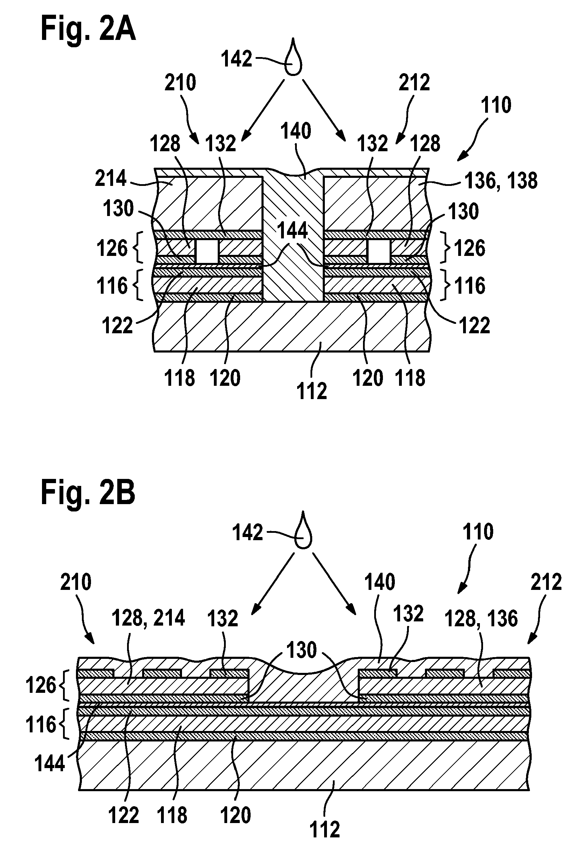

In den Figuren 2A und 2B sind zwei verschiedene Ausfiihrungsbeispiele eines erfindungsgemäßen integrierten Testelements 110 dargestellt, welche jeweils eine Referenzeinrichtung 210 aufweisen. In dem Ausführungsbeispiel gemäß Figur 2A ist im rechten Teil die eigentliche Messeinrichtung 212 ausgebildet, welche in einem Schichtaufbau ähnlich zum Schichtaufbau gemäß dem Ausführungsbeispiel in Figur 1A zusammengesetzt ist. Auf ein Trägerelement 112 folgt der Schichtaufbau eines OPDs 116, gefolgt von einem optischen Filterelement 144. Daran schließt sich der Schichtaufbau der OLEDs 126 an, analog zu Figur 1A. Auf den OLEDs 126 ist die Indikatorschicht 138 aufgebaut, welche die Indikatorsubstanz 136 enthält. Zur Funktionsweise dieser Messeinrichtung 212 sei auf die Beschreibung des Ausführungsbeispiels in Figur 1A verwiesen.

Gleichzeitig ist auf dem Trägerelement 112 des integrierten Testelements 110 im Ausfixhrungsbeispiel gemäß Figur 2A jedoch auch die Referenzeinrichtung 210 angeordnet. Diese Referenzeinrichtung umfasst im Beispiel gemäß Figur 2A zunächst wiederum einen OPD 116, analog zur Messeinrichtung 212. Dieser OPD 116 wird durch ein optisches Filterelement 144 abgedeckt, gefolgt von OLEDs 126, analog zur Messeinrichtung 212.

An die OLEDs 126 schließt sich jedoch in dem Beispiel gemäß Figur 2A keine Indikatorschicht 138 an, sondern eine Schicht eines Referenzfluorophors 214. Dabei kann es sich beispielsweise um eine diffuse Streuschicht und/oder eine reine Reflexionsschicht handeln, welche von den OLEDs 126 eingestrahltes Anregungslicht in den OPD 116 der Referenzeinrichtung 210 reflektiert. Bei den OLEDs 126 und den OPDs 116 der Referenzeinrichtung 110 handelt es sich vorzugsweise um identische beziehungsweise zumindest ähnliche OLEDs 126 beziehungsweise OPDs 116 wie in der Messeinrichtung 212. Insofern kann als Referenzfluorophor 214 auch eine wellenlängenverschiebende Substanz verwendet werden, beispielsweise ein Farbstoff, welcher, unabhängig von der Anwesenheit oder Abwesenheit eines Analyten, eine wellenlängenverschobene Fluoreszenz abstrahlt, welche wiederum vom OPD 116 aufgenommen werden kann. Um Referenzeinrichtung 210 und Messeinrichtung 212 möglichst analog auszugestalten, sind dabei vorzugsweise die spektralen Eigenschaften dieses Referenzfluorophors 214 ähnlich gewählt zur Indikatorsubstanz 136 in der Indikatorschicht 138 der Messeinrichtung 212.

Somit liefern die OPDs 116 der Messeinrichtung 212 ein Signal, welches, wie oben beschrieben, auf die Anwesenheit oder Abwesenheit beziehungsweise auch auf eine Konzentration des nachzuweisenden Analyten (beziehungsweise der nachzuweisenden Analyten) in der Probe 142 schließen lässt. Wie oben beschrieben, ist dieses Signal jedoch, beispielsweise aufgrund von Schwankungen der Eigenschaften der Bauelemente oder Alterungseffekten, mit einer Unsicherheit behaftet und kann zeitlich veränderlich sein. Dementsprechend wird, wie oben beschrieben, das Signal der Referenzeinrichtung 210 herangezogen, welches ähnlichen Schwankungen ausgesetzt ist. Beispielsweise durch Quotientenbildung oder ähnliche Korrekturalgorithmen können somit Fehler und Signaldrifts ausgeglichen werden. Auch ein Einfluss der Probe 142 auf die Bauteileigenschaften kann dadurch ausgeglichen werden, da beispielsweise eine flüssige Probe 142 Einfluss auf die Charakteristik, Lebensdauer und/oder Helligkeit der OLEDs 126 und OPDs 116 nehmen kann. Insgesamt lassen sich auf diese Weise multiplikative Einflüsse ausgleichen, wobei wahlweise zusätzlich noch Maßnahmen getroffen werden können, um additive Einflüsse, wie beispielsweise Dunkelströme, separat zu messen und zu korrigieren.

Es sei noch darauf hingewiesen, dass eine Referenzeinrichtung 210 im Prinzip nicht einmal ein Referenzfluorophor 214 enthalten muss, da beispielsweise die OPDs 116 der Referenzeinrichtung 210 unmittelbar das Anregungslicht der OLEDs 126 als Referenz aufnehmen können. Dies reicht prinzipiell zur Quotientenbildung aus. Auch ein optisches Filterelement 144 ist in der Referenzeinrichtung 210 nicht unmittelbar erforderlich. Es hat sich in der Praxis jedoch gezeigt, dass es sinnvoll ist, die Referenzeinrichtung 210 vom Schichtaufbau her möglichst ähnlich oder analog zur Messeinrichtung 212 auszugestalten, um möglichst vergleichbare Werte und somit eine möglichst sichere Korrektur zu generieren.

In Figur 2B ist ein zur Figur 2A analoges Ausführungsbeispiel eines integrierten Testelements 110 mit einer Referenzeinrichtung 210 dargestellt. Wiederum weist das integrierte Testelement 110 eine Referenzeinrichtung 210 und eine Messeinrichtung 212 auf demselben Trägerelement 112 auf. Aufbau und Funktionsweise der Messeinrichtung 212 entsprechen dem Aufbau des integrierten Testelements gemäß dem Ausführungsbeispiel in Figur 1C. Dies bedeutet, dass sich an einen OPD 116 (auch eine Ausgestaltung mit mehreren OPDs 116 ist möglich) ein optisches Filterelement 144 anschließt, gefolgt von einer OLED 126, bei welcher in mindestens einer organischen Schicht 128 eine Indikatorsubstanz 136 eingebracht ist. Auch ein Aufbau mit einer separaten Schicht der Indikatorsubstanz 136 in der OLED 126 ist denkbar. Für die Funktionsweise und den Aufbau der Messeinrichtung 212 sei auf die obige Beschreibung zur Figur 1C verwiesen.

Die Referenzeinrichtung 210 und die Messeinrichtung 212 teilen sich in diesem Ausfiihrungsbeispiel gemäß Figur 2B den Photodetektor 116 und das optische Filterelement 144. Alternativ sind jedoch auch andere Ausgestaltungen mit separaten OPDs 116 und separaten Filterelementen 144 möglich.

Die Referenzeinrichtung 210 weist wiederum eine OLED 126 auf, welche prinzipiell dem Aufbau der OLED 126 in der Messeinrichtung 212 entsprechen kann. Allerdings ist in diesem Ausführungsbeispiel in die organischen Schichten 128 der OLED 126 der Referenzeinrichtung 210 ein Referenzfluorophor 214 eingemischt beziehungsweise als separate Schicht ein- beziehungsweise aufgebracht. Für den Aufbau gilt das zur Indikatorsubstanz 136 Gesagte analog. Wiederum liefert somit, analog zur Beschreibung in Figur 2A, die Referenzeinrichtung 210 ein von der Anwesenheit oder Abwesenheit des mindestens einen Analyten in der Probe 142 unabhängiges Signal. Auch hier kann prinzipiell wiederum alternativ auf ein Referenzfluorophor 214 in der OLED 126 vollständig verzichtet werden, analog zum oben Gesagten bezüglich Figur 2A.

Die Tatsache, dass sich in diesem Ausführungsbeispiel gemäß Figur 2B die Messeinrichtung 212 und die Referenzeinrichtung 210 denselben OPD 116 teilen, kann beispielsweise mittels eines gepulsten Messschemas dennoch zu getrennten Messbeziehungsweise Referenzsignalen fähren (Multiplexing in Frequenz und Zeit). Wie oben beschrieben, ist auch eine Ausgestaltung mit getrennten OPDs möglich.

In Figur 3 ist ein Testsystem 310 zum Nachweis mindestens eines Analyten in einer Probe 142 dargestellt, welches ein integriertes Testelement 110 mit einer Referenzeinrichtung 210 einsetzt. Dabei sei im Folgenden angenommen, dass das integrierte Testelement 110 aufgebaut ist gemäß dem Ausführungsbeispiel in Figur 2A. Prinzipiell sind jedoch beliebige integrierte Testelemente 110 mit Referenzeinrichtung 210 einsetzbar.

Das Testsystem 310 weist ein integriertes Testelement 110 auf, welches in Figur 3 symbolisch dargestellt ist. Das integrierte Testelement 110 umfasst eine Referenzeinrichtung 210 und eine Messeinrichtung 212, welche jeweils OLEDs 126 und OPDs 116 aufweisen. Wie in Figur 2A umfasst die Referenzeinrichtung 210 ein Referenzfluorophor 214, und die Messeinrichtung 212 umfasst eine Indikatorschicht 138 mit einer Indikatorsubstanz 136. Auch andere Aufbauten sind möglich.

Weiterhin umfasst das Testsystem 310 eine Ansteuer- und Auswerteelektronik 312, welche separat von dem integrierten Testelement 110 aufgebaut sein kann (beispielsweise als Bestandteil eines Messgeräts), oder welche auch ganz oder teilweise als Bestandteil des integrierten Testelements 110, beispielsweise in Form einer aufgedruckten Schaltung oder eines ICs, realisiert sein kann. Die Ansteuer- und Auswerteelektronik 312 und das integrierte Testelement 110 sind beispielsweise über eine Schnittstelle 109 verbunden, beispielsweise eine Schnittstelle, welche einen oder mehrere Steckverbinder aufweist. Im Fall einer vollständigen oder teilweisen Integration der Ansteuer- und Auswerteelektronik 312 kann diese Schnittstelle auch ganz oder teilweise entfallen oder durch entsprechende Leitungen ersetzt werden.

Die Ansteuer- und Auswerteelektronik 312 umfasst eine Ansteuerschaltung 314 zum Betreiben der OLEDs 126 in der Messeinrichtung 212 und der Referenzeinrichtung 210. Die Ausgestaltung dieser Ansteuerschaltung 314 der OLEDs 126 ist dem Fachmann bekannt. Beispielsweise kann es sich um eine oder mehrere einfache Stromquellen handeln, welche die OLEDs 126 gepulst oder kontinuierlich mit einem Strom konstanter Stärke versorgen. Übliche Betriebsspannungen liegen dabei im Bereich zwischen 1 und 10 Volt. Auch komplexere Treiberschaltungen sind möglich, so dass z. B. (siehe oben) auch ein gepulstes Ansteuerschema der OLEDs 126, z. B. in Kombination mit einer zeitaufgelösten Auswertung, realisierbar ist. Auch eine Ansteuerung mit konstanter Spannung ist denkbar, ist jedoch weniger vorteilhaft, da in der Regel die Leuchtstärke der OLEDs 126 proportional zum Ansteuerstrom ist. Die OLEDs 126 der Messeinrichtung 212 und der Referenzeinrichtung 210 können jeweils separat oder auch gemeinsam von der Ansteuerschaltung 314 angesteuert werden. Dabei können beispielsweise auch thermische Effekte berücksichtigt werden, welche eine Veränderung der Intensität der OLEDs 126 durch Erwärmung berücksichtigen und/oder entsprechend korrigieren.

Weiterhin umfasst in diesem Ausführungsbeispiel gemäß Figur 3 die Ansteuer- und Auswerteelektronik 312 eine erste OPD-Verstärkung 316 zum Ansteuern und Auswerten des OPDs 116 der Referenzeinrichtung 210 sowie eine zweite OPD-Verstärkung 318 zum Ansteuern und Auswerten des OPDs 116 der Messeinrichtung 212. Die OPD-Verstärkungen 316, 318 dienen im Wesentlichen dazu, die von den OPDs 116 generierten Signale aufzunehmen und gegebenenfalls entsprechend auszuwerten, das heißt beispielsweise eine Vorverarbeitung, Filterung etc. durchzuführen. Auch können teilweise OPDs 116 mit einer Vorspannung betrieben werden, welche in diesem Fall ebenfalls von den OPD-Verstärkungen 316, 318 zur Verfügung gestellt werden kann.

Weiterhin weist die Ansteuer- und Auswerteelektronik 312 in dem Ausführungsbeispiel gemäß Figur 3 eine erste Auswerteelektronik 320 auf, welche mit Signalen der Ansteuerschaltung 314 der OLEDs 126 und mit Signalen der ersten OPD-Verstärkung 316 gespeist und gegebenenfalls auch von der Ansteuerschaltung 314 synchronisiert wird (in Fig. 3 symbolisch durch den Pfeil 325 angedeutet). Wie oben beschrieben, berechnet die erste Auswerteelektronik 320 beispielsweise einen Korrekturfaktor, welcher eine Alterung der OLEDs 126 und/oder OPDs 116 berücksichtigt. So kann beispielsweise die erste Auswerteelektronik 320 (wie auch die gesamte Ansteuer- und Auswerteelektronik 312) ganz oder teilweise als Mikroprozessor realisiert sein, wobei beispielsweise bei konstanter Stromstärke, mit welcher die OLEDs 126 betrieben werden, ein Quotient aus dem von der ersten OPD-Verstärkung 316 gelieferten Signal und dem Stromstärken-Signal der Ansteuerschaltung 314 der OLEDs 126 gebildet wird. Diesem Quotienten kann beispielsweise anfänglich willkürlich der Korrekturfaktor 1 zugeordnet werden. Sinkt im Laufe des Betriebs des Testsystems 310 beziehungsweise des integrierten Testelements 110 der Quotient, so werden entsprechend proportional kleinere Korrekturfaktoren generiert.

Weiterhin weist die Ansteuer- und Auswerteelektronik 312 eine zweite Auswertungselektronik 322 auf, welche analog zur ersten Auswertungselektronik 320 arbeitet und welche mit Signalen der Ansteuerschaltung 314 der OLEDs 126 und mit Signalen der zweiten OPD- Verstärkung 318 gespeist wird und gegebenenfalls durch die Ansteuerschaltung 314 synchronisiert wird (in Fig. 3 symbolisch angedeutet durch Pfeil 326). Die Signale dieser zweiten Auswertungselektronik 322 werden, wie auch die Signale der ersten Auswertungselektronik 320, weitergegeben an einen Steuerprozessor 323. Der Steuerprozessor 323 kann beispielsweise Mittel umfassen, um aus den Signalen der zweiten OPD- Verstärkung 318 und den Ansteuersignalen der Ansteuerschaltung 314 der OLEDs 126 auf eine Analytkonzentration in der Probe 142 zu schließen. Beispielsweise kann dieser Zusammenhang als Rechenregel hinterlegt sein (z. B. "Konzentration ist proportional zum OPD-Signal bei vorgegebenem OLED-Strom"), und/oder es können auch beispielsweise so genannte Look-Up-Tables vorgegeben werden, welche eine Korrelation und Auswertung ermöglichen. Auch chargenspezifische Daten einer Charge integrierter Testelemente 110 können in dieser Rechenregel beziehungsweise diesen Auswertungsinformationen enthalten sein. Auch andere Realisierungen der Auswertungselektronik 322 sind denkbar, wie für den Fachmann ersichtlich ist. Um die Korrektur zu berücksichtigen, welche von der ersten Auswerteelektronik 320 generiert wird und welche beispielsweise auf eine Degradation der OLEDs 126 beziehungsweise OPDs 116 schließen lässt, kann beispielsweise die ermittelte Analytkonzentration durch den oben genannten Korrekturfaktor geteilt beziehungsweise mit diesem multipliziert werden. Auch andere Formen der Korrektur sind denkbar, beispielsweise indem das von der ersten Auswerteelektronik 320 generierte Signal unmittelbar Einfluss nimmt auf die Berechnung beziehungsweise Bestimmung der Analytkonzentration. Weiterhin kann der Steuerprozessor 323 auch Mittel zur Mittelwert-Erzeugung und zur Mittelwert-Korrektur umfassen. In diesem Ausführungsbeispiel gemäß Figur 3 bilden also der Steuerprozessor 323 und die Auswerteelektroniken 320, 322 Bestandteile der oben beschriebenen Korrekturelektronik.

Das Testsystem 310 generiert schließlich ein Messwertsignal 324, bei welchem es sich beispielsweise um ein analoges oder digitales Datensignal handeln kann. Dieses Messwertsignal kann in der Ansteuer- und Auswerteelektronik 312 selbst in einen entsprechenden Messwert umgewandelt werden, oder es kann eine Weiterleitung an zusätzliche elektronische Komponenten erfolgen. Auf diese Weise können Messergebnisse, also insbesondere Analytkonzentrationen, beispielsweise auf einem Display dargestellt werden oder in eine Datenbank oder einen Speicher eines Computersystems eingegeben werden. Beispielsweise kann das gesamte Testsystem 310 als kompaktes tragbares Messgerät ausgestaltet sein, wobei das integrierte Testelement 110 in ein Gehäuse mit entsprechenden Anschlüssen eingesteckt wird. Derartige Messgeräte sind aus dem Stand der Technik bekannt, so dass eine Anpassung auf die Besonderheiten des Testsystems 310 gemäß der Darstellung in Figur 3 für den Fachmann möglich ist.

In Figur 4 ist schließlich ein Ausführungsbeispiel eines integrierten Testelements 110 dargestellt, welches eine Nadelform aufweist. Dabei ist in diesem Ausführungsbeispiel, welches in Figur 4 in Schnittdarstellung gezeigt ist, im Wesentlichen derselbe Schichtaufbau verwendet wie im Ausführungsbeispiel gemäß Figur 1E. Prinzipiell sind jedoch auch alle anderen Schichtaufbauten möglich, beispielsweise die Schichtaufbauten gemäß der Figuren 1A bis 1F.

Im Gegensatz zur ebenen Anordnung gemäß Figur 1E ist das integrierte Testelement 110 im Ausführungsbeispiel gemäß Figur 4 rotationssymmetrisch um die Symmetrieachse 410. Das Trägerelement 112 ist in diesem Ausführungsbeispiel als rotationssymmetrisches, nadelförmiges Element ausgebildet. Auf dieses aufgebracht sind in einer ersten Schicht- "Ebene" (das heißt eigentlich als Hohlzylinderschichten) die OLEDs 126 und der OPD 116, welche durch das Lichtblocker-Element 148 voneinander getrennt sind. Alternativ lassen sich auch Ausgestaltungen mit mehreren OLEDs 126 und/oder mehreren OPDs 116 realisieren. An den OPD 116 und die OLEDs 126 schließt sich in einer zweiten Schicht- "Ebene" die Indikatorschicht 138 an, gefolgt von einer Barriereschicht 140. Zur Funktionsweise des integrierten Testelements gemäß Figur 4 sei auf die Beschreibung zur Figur 1E verwiesen.

Das nadelförmige integrierte Testelement 110 gemäß dem Beispiel in Figur 4 eignet sich beispielsweise für eine Implantation in Körpergewebe, beispielsweise in interstitielles Fettgewebe. Zu diesem Zweck kann das integrierte Testelement 110 beispielsweise unmittelbar in das Körpergewebe eingestochen werden. Alternativ kann das integrierte Testelement 110 auch in eine Kanüle eingeführt werden, welche ihrerseits in das Körpergewebe eingeführt ist beziehungsweise eingeführt wird. Auf diese Weise kann das integrierte Testelement 110 beispielsweise während einer Anwendungsdauer von circa einer Woche in dem Körpergewebe verbleiben und fortlaufend Messwerte liefern.

Für die Herstellung des nadelförmigen integrierten Testelements 110 gemäß dem Ausführungsbeispiel in Figur 4 wird beispielsweise auf die oben erwähnte Veröffentlichung von M. Sampietro et al. verwiesen. Die dort offenbarten Schichttechnologien zum Aufbringen von organischen Detektoren auf optische Fasern lassen sich unmittelbar auf den Aufbau des integrierten Testelements 110 gemäß Figur 4 übertragen. Auch ein Aufbringen von übereinander liegenden OLEDs 126 und OPDs 116, gefolgt von einer oder mehreren Indikatorschichten 138 ist denkbar, ähnlich beispielsweise zu dem Aufbau in Figur 1C. Auf diese Weise lassen sich beispielsweise einfache Tauchverfahren einsetzen, um die einzelnen Schichten der OLEDs 126, OPDs 116 und Indikatorschichten 138 (gegebenenfalls integriert in die organischen Schichten 128 der OLEDs 126) zu realisieren. Bei implantierten integrierten Testelementen 110 spielt insbesondere die Barriereschicht 140, welche ebenfalls beispielsweise durch ein Tauchverfahren aufgebracht werden kann, eine besondere Rolle, da, wie oben erwähnt, die eingesetzten Indikatorsubstanzen sich teilweise toxisch auf lebendes menschliches Gewebe auswirken können.

Zusätzlich (in Fig. 4 nicht dargestellt) kann die Indikatorschicht 138 in dem Ausführungsbeispiel in Fig. 4 auch noch so genannte "Blutkavitäten" aufweisen. Dabei handelt es sich um (beispielsweise ring- oder lochförmige) Einbuchtungen in der Indikatorschicht 138 (und gegebenenfalls der darüberliegenden Barriereschicht 140), in welchen sich aufgrund von Kapillarkräften oder Adhäsion Blut ansammeln kann, um dort auch dann zu verbleiben, wenn das nadelförmige Testelement 110 wieder aus dem Körpergewebe herausgezogen wurde. Dies ermöglicht eine Analyse auch außerhalb des Körpergewebes.

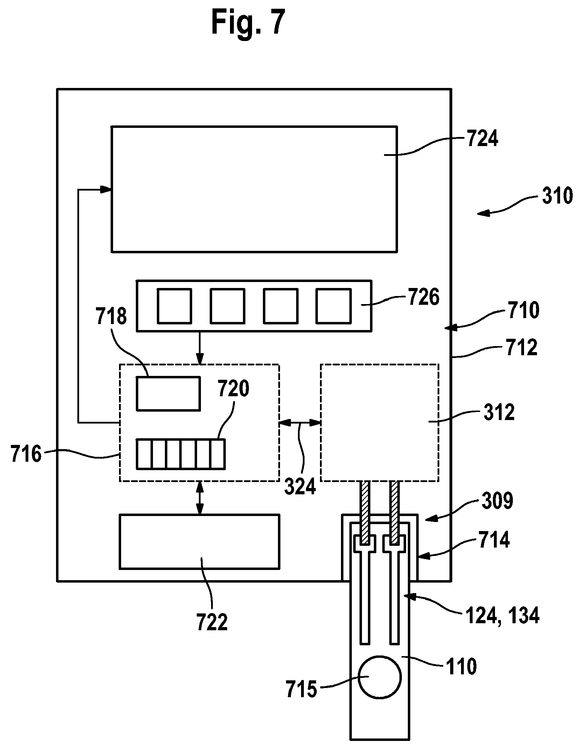

In Figur 7 ist schließlich ein Ausführungsbeispiel eines Testsystems 310 dargestellt, welches ein als tragbares Handgerät ausgeführtes Messgerät 710 und ein integriertes Testelement 110 aufweist. Das Testsystem 310 beinhaltet eine Ansteuer- und Auswerteelektronik 312, welche mit dem integrierten Testelement 110 über eine Schnittstelle 309 verbunden ist. Beispielsweise kann dabei ein integriertes Testelement 110 und eine Ansteuer- und Auswerteelektronik 312 gemäß dem Aufbau in Figur 3 verwendet werden, so dass diesbezüglich auf die obige Beschreibung zu Figur 3 verwiesen werden kann. Auch andere Ausgestaltungen der Ansteuer- und Auswerteelektronik 312 und/oder des integrierten Testelements 110 sind möglich.

Das Messgerät 710 weist ein Gehäuse 712 auf, beispielsweise ein Kunststoffgehäuse mit für eine tragbare Anwendung geeigneten Dimensionen und Ausformungen. In das Gehäuse eingelassen ist ein Analyseschlitz 714, in welchen das in diesem Ausführungsbeispiel als Teststreifen mit einer Applikationszone 715 für eine flüssige Probe 142 ausgeführte integrierte Testelement 110 eingegeben werden kann. Der Analyseschlitz 714 beinhaltet die Schnittstelle 309, in welcher beispielsweise mittels entsprechender Federkontakte (nicht dargestellt) die Elektrodenkontakte 124, 134 (in Figur 7 nur symbolisch angedeutet) des beziehungsweise der OPDs 116 und OLEDs 126 elektrisch kontaktiert werden, analog zur Darstellung in Figur 3.

Neben der Ansteuer- und Auswerteelektronik 312 weist das Messgerät in Figur 7 einen Mikrocomputer 716 auf. Dieser Mikrocomputer 716 wertet beispielsweise die von der Ansteuer- und Auswerteelektronik 312 generierten Daten aus und steuert diese Ansteuer- und Auswerteelektronik 312 entsprechend an. Die Ansteuer- und Auswerteelektronik 312 kann, abweichend von der Darstellung in Figur 7, auch ganz oder teilweise Bestandteil des Mikrocomputers 716 sein. Der Mikrocomputer 716 kann eine zentrale Prozessoreinheit 718 und einen oder mehrere flüchtige oder nichtflüchtige Datenspeicher 720 aufweisen.

Weiterhin weist das Messgerät 710 in Figur 7 einen Energiespeicher 722 (beispielsweise eine Batterie), ein Anzeigenelement 724 (beispielsweise eine Flüssigkristallanzeige oder ein OLED-Display) sowie Eingabeelemente 726 (beispielsweise eine oder mehrere Drucktasten) auf So kann beispielsweise über die Eingabeelemente 726 eine Bedienung des Messgeräts 710 erfolgen und beispielsweise eine Messung gestartet werden. Auch andere Funktionen des Testsystems 310 können auf diese Weise aufgerufen und genutzt werden, beispielsweise eine Datenbankfunktion für Messwerte, eine Aufarbeitung und graphische Darstellung von Messdaten auf dem Anzeigenelement 724 oder auch eine Kommunikation mit anderen Geräten, beispielsweise zum Zweck eines Datenaustauschs mit einem medizinischen Computersystem (in Figur 7 nicht dargestellt).

### Bezugszeichenliste

- 110: integriertes Testelement
- 112: Trägerelement
- 114: Applikationsseite
- 116: organisches Dünnfilm-Photo detektor-Element (OPD)
- 118: organische Schichten OPD
- 120: 1. Elektrode OPD
- 122: 2. Elektrode OPD
- 124: Elektrodenkontakte OPD
- 126: organische lichtemittierende Diode (OLED)
- 128: organische Schichten OLED
- 130: 1. Elektrode OLED
- 132: 2. Elektrode OLED
- 134: Elektrodenkontakte OLED
- 136: Indikatorsubstanz
- 138: Indikatorschicht
- 140: Barriereschicht
- 141: Sprite-Funktion
- 142: Probe
- 144: optisches Filterelement
- 146: Zwischenraum
- 148: Lichtblocker-Element

- 210: Referenzeinrichtung
- 212: Messeinrichtung
- 214: Referenzfluorophor

- 309: Schnittstelle
- 310: Testsystem
- 312: Ansteuer- und Auswerteelektronik
- 314: Ansteuerschaltung OLEDs
- 316: erste OPD-Verstärkung
- 318: zweite OPD-Verstärkung

- 320: Erste Auswerteelektronik
- 322: Zweite Auswertungselektronik
- 323: Steuerprozessor
- 324: Messwertsignal/Display
- 325: Synchronisation
- 326: Synchronisation

- 410: Symmetrieachse

- 510: Aufbringen 1. Elektrode OPD
- 512: Strukturieren 1. Elektrode OPD
- 514: Aufbringen organische Schichten OPD
- 516: Aufbringen 2. Elektrode OPD
- 518: Aufbringen optisches Filterelement
- 520: (strukturiertes) Aufbringen 2. Elektroden OLED
- 522: Aufbringen organische Schichten OLED
- 524: (strukturiertes) Aufbringen 2. Elektroden OLED
- 526: Aufbringen Indikatorschicht
- 528: Aufbringen Barriereschicht

- 610: Aufbringen 1. Elektrode OPD
- 612: Strukturieren 1. Elektrode OPD
- 614: Aufbringen organische Schichten OPD
- 616: Aufbringen 2. Elektrode OPD
- 618: Aufbringen optisches Filterelement
- 620: Aufbringen 1. Elektrode OLED
- 622: Einmischen Indikatorsubstanz in Polymerlösung für OLED
- 624: Aufbringen organische Schichten OLED
- 626: (strukturiertes) Aufbringen 2. Elektroden OLEDs
- 628: Aufbringen Barriereschicht

- 710: Messgerät
- 712: Gehäuse
- 714: Analyseschlitz
- 715: Applikationszone
- 716: Mikrocomputer
- 718: Zentrale Prozessoreinheit
- 720: Datenspeicher
- 722: Energiespeicher
- 724: Anzeigenelement

## Patentansprüche

1. Integriertes Testelement (110) zum Nachweis mindestens eines Analyten in einer Probe (142), insbesondere einer flüssigen Probe (142), aufweisend ein Trägerelement (112), wobei auf eine Applikationsseite (114) des Trägerelements (112) mindestens ein organisches elektrolumineszierendes Bauelement (126), insbesondere mindestens ein organisches elektrolumineszierendes Dünnfilm-Bauelement, insbesondere mindestens eine organische lichtemittierende Diode (OLED) (126), aufgebracht ist, wobei das integrierte Testelement (110) weiterhin mindestens ein Photodetektor-Element (116) aufweist, wobei das integrierte Testelement (110) auf der Applikationsseite (114) mindestens eine Indikatorsubstanz (136) aufweist, wobei das mindestens eine organische elektrolumineszierende Bauelement (126) derart ausgestaltet ist, dass von diesem emittiertes Anregungslicht zumindest teilweise in die mindestens eine Indikatorsubstanz (136) gelangt, und wobei die mindestens eine Indikatorsubstanz (136) ausgestaltet ist, um mindestens eine optische Eigenschaft, insbesondere eine Emissionseigenschaft, insbesondere eine Fluoreszenzeigenschaft, zu ändern, wenn die mindestens eine Indikatorsubstanz (136) in Kontakt mit dem mindestens einen Analyten gerät.

2. Integriertes Testelement (110) gemäß Anspruch 1, **dadurch gekennzeichnet, dass** das mindestens eine Photodetektor-Element (116) mindestens ein organisches Dünnfilm-Photodetektor-Element (116) aufweist.

3. Integriertes Testelement (110) gemäß einem der vorhergehenden Ansprüche, **dadurch gekennzeichnet, dass** das mindestens eine Photodetektor-Element (116) auf der Applikationsseite (114) angeordnet ist.

4. Integriertes Testelement (110) gemäß einem der vorhergehenden Ansprüche, **dadurch gekennzeichnet, dass** die mindestens eine Indikatorsubstanz (136) zumindest teilweise in direktem physikalischen Kontakt mit dem mindestens einen organischen elektrolumineszierenden Bauelement (126) steht, insbesondere an dieses angrenzt und/oder zumindest teilweise mit diesem identisch ist.

5. Integriertes Testelement (110) gemäß Anspruch 4, **dadurch gekennzeichnet, dass** die mindestens eine Indikatorsubstanz (136) ganz oder teilweise integriert, insbesondere eingemischt und/oder chemisch eingebunden ist in mindestens eine organische Schicht (128) des mindestens einen organischen elektrolumineszierenden Bauelements (126).

6. Integriertes Testelement (110) gemäß einem der vorhergehenden Ansprüche, **dadurch gekennzeichnet, dass** das mindestens eine Trägerelement (112) mindestens ein nadelförmiges und/oder hohlnadelförmiges und/oder lanzettenförmiges Bauteil zum Einstechen und/oder Einführen in ein Körpergewebe aufweist.

7. Integriertes Testelement (110) gemäß einem der vorhergehenden Ansprüche, **dadurch gekennzeichnet, dass** das von dem mindestens einen organischen elektrolumineszierenden Bauelement (126) emittierte Anregungslicht ganz oder teilweise daran gehindert wird, in das mindestens eine Photodetektor-Element (116) zu gelangen.

8. Integriertes Testelement (110) gemäß Anspruch 7, **gekennzeichnet durch** mindestens ein optisches Filterelement (144) und/oder mindestens ein Lichtblocker-Element (148).

9. Integriertes Testelement (110) gemäß einem der vorhergehenden Ansprüche, **gekennzeichnet durch** mindestens eine Referenzeinrichtung (210), wobei die mindestens eine Referenzeinrichtung (210) ausgestaltet ist, um mindestens eine optische Eigenschaft, insbesondere eine Reflexionseigenschaft und/oder eine Emissionseigenschaft, insbesondere eine Fluoreszenzeigenschaft, in Abhängigkeit von der Intensität des von dem mindestens einen organischen elektrolumineszierenden Bauelement (126) emittierten Anregungslichts zu ändern, wobei die Änderung der mindestens einen optischen Eigenschaft zumindest weitgehend unabhängig ist von der Anwesenheit oder Abwesenheit des mindestens einen Analyten.

10. Integriertes Testelement (110) gemäß dem vorhergehenden Anspruch, **dadurch gekennzeichnet, dass** die mindestens eine Referenzeinrichtung (210) mindestens einen Reflektor und/oder mindestens ein Referenzfluorophor (214), insbesondere einen Papierfarbaufheller und/oder ein Metalloxid, insbesondere TiO₂, aufweist.

11. Integriertes Testelement (110) gemäß einem der vorhergehenden Ansprüche, **dadurch gekennzeichnet, dass** das mindestens eine organische elektrolumineszierende Bauelement (126) und/oder das mindestens eine Photodetektor-Element (116) aus mehreren einzelnen organischen elektrolumineszierenden Bauelementen (126) beziehungsweise Photodetektor-Elementen (116), insbesondere mindestens einer Matrix derartiger Bauelemente (116, 126), zusammengesetzt ist.

12. Integriertes Testelement (110) gemäß einem der vorhergehenden Ansprüche, **dadurch gekennzeichnet, dass** das mindestens eine organische elektrolumineszierende Bauelement (126) und das mindestens eine Photodetektor-Element (116) in derselben Schichtebene auf dem Trägerelement (112) angeordnet sind.

13. Integriertes Testelement (110) gemäß einem der vorhergehenden Ansprüche, **gekennzeichnet durch** eine zusätzliche, das integrierte Testelement (140) ganz oder teilweise abdeckende Barriereschicht (140), wobei die Barriereschicht (140) mindestens eine der folgenden Eigenschaften aufweist: eine Undurchlässigkeit für die mindestens eine Indikatorsubstanz (136); eine zumindest teilweise Durchlässigkeit für die Probe (142); eine die Probe zumindest teilweise in ihre Bestandteile trennende Wirkung.

14. Testsystem (310) zum Nachweis mindestens eines Analyten in einer Probe (142), insbesondere einer flüssigen Probe (142), aufweisend mindestens ein integriertes Testelement (110) gemäß einem der vorhergehenden Ansprüche sowie weiterhin mindestens eine Ansteuer- und Auswerteelektronik (312) mit Mitteln (314) zum Ansteuern des mindestens einen organischen elektrolumineszierenden Bauelements (126), Mitteln (316, 318) zum Auslesen des mindestens einen Photodetektor-Elements (116) und Mitteln (323) zum Berechnen mindestens einer Analytkonzentration aus einem bekannten Zusammenhang zwischen der Änderung der mindestens einen optischen Eigenschaft der mindestens einen Indikatorsubstanz und der Konzentration des mindestens einen Analyten.

15. Testsystem (310) gemäß dem vorhergehenden Anspruch mit einem integrierten Testelement (110) gemäß einem der Ansprüche 9 oder 10, wobei die mindestens eine Ansteuer- und Auswerteelektronik (312) weiterhin mindestens eine Korrekturelektronik (320, 322, 323) aufweist, wobei die mindestens eine Korrekturelektronik (320, 322, 323) ausgestaltet ist, um entsprechend einer mittels der mindestens einen Referenzeinrichtung (210) generierten Information eine Korrektur der Berechnung der mindestens einen Analytkonzentration vorzunehmen.

16. Testsystem (310) gemäß dem vorhergehenden Anspruch, **dadurch gekennzeichnet, dass** die mindestens eine Ansteuer- und Auswerteelektronik (312) zumindest teilweise als organische elektronische Schaltung, insbesondere als Schaltung mit mindestens einem organischen Dünnfilm-Transistor, ausgestaltet ist.

17. Verfahren zur Herstellung eines integrierten Testelements (110) gemäß einem der Ansprüche 1 bis 13, aufweisend folgende Verfahrensschritte:
- mindestens ein organisches elektrolumineszierendes Bauelement (126), insbesondere mindestens ein organisches elektrolumineszierendes Dünnfilm-Bauelement (126), insbesondere mindestens eine organische lichtemittierende Diode (OLED) (126), wird auf eine Applikationsseite (114) eines Trägerelements (112) aufgebracht;
- mindestens ein Photodetektor-Element (116), insbesondere mindestens ein organisches Dünnfilm-Photodetektor-Element (116), wird auf das Trägerelement (112), insbesondere auf die Applikationsseite (114) des Trägerelements (112), aufgebracht; und
- mindestens eine Indikatorsubstanz (136) wird auf die Applikationsseite (114) des Trägerelements (112) aufgebracht, wobei die mindestens eine Indikatorsubstanz (136) ausgestaltet ist, um mindestens eine optische Eigenschaft, insbesondere eine Emissionseigenschaft, insbesondere eine Fluoreszenzeigenschaft, zu ändern, wenn die mindestens eine Indikatorsubstanz (136) in Kontakt mit dem mindestens einen Analyten gerät.

18. Verfahren gemäß dem vorhergehenden Anspruch zur Herstellung eines integrierten Testelements (110) gemäß einem der Ansprüche 4 oder 5, **dadurch gekennzeichnet, dass** mindestens einer der folgenden Verfahrensschritte eingesetzt wird:
- die mindestens eine Indikatorsubstanz (136) wird in mindestens eine Ausgangssubstanz zur Herstellung mindestens einer organischen Schicht (128) des mindestens einen organischen elektrolumineszierenden Bauelements (126) eingemischt;
- die mindestens eine Indikatorsubstanz (136) wird durch gleichzeitiges oder sequenzielles Aufbringen aus der flüssigen Phase und/oder der Gasphase, insbesondere durch Co-Verdampfen, mit mindestens einer Ausgangssubstanz zur Herstellung mindestens einer organischen Schicht (128) des mindestens einen organischen elektrolumineszierenden Bauelements (126) aufgebracht.
